# EUROPÄISCHE PATENTSCHRIFT

(11) **EP 1 334 287 B1**
(45) Veröffentlichungstag und Bekanntmachung des Hinweises auf die Patenterteilung: **23.04.2008**
(21) Anmeldenummer: 01996697.7
(22) Anmeldetag: 30.10.2001
(51) Int. Cl.: F16D 25/12, F16D 21/06, F16D 48/06

(54) **KUPPLUNGSSYSTEM**
CLUTCH SYSTEM
SYSTEME D'EMBRAYAGE

(30) Priorität: 17.11.2000 DE 10056953; 23.01.2001 DE 10102874
(43) Veröffentlichungstag der Anmeldung: 13.08.2003
(73) Patentinhaber: ZF Sachs AG, 97424 Schweinfurt (DE)
(72) Erfinder: BUSOLD, Thomas, 36039 Fulda (DE); GROSSPIETSCH, Wolfgang, 97422 Schweinfurt (DE); MOSELER, Olaf, 97070 Würzburg (DE)
(86) Internationale Anmeldenummer: PCT/EP2001/012515
(87) Internationale Veröffentlichungsnummer: WO 2002/040886

(56) Entgegenhaltungen:
- DE-A- 2 604 608
- DE-A- 19 800 490
- US-A- 4 759 432
- US-A- 6 145 644

## Beschreibung

### [Technisches Gebiet]

Die Erfindung betrifft ein Kupplungssystem, umfassend wenigstens eine Kupplungseinrichtung insbesondere für die Anordnung in einem Antriebsstrang (insbesondere eines Kraftfahrzeugs) zwischen einer Antriebseinheit und einem Getriebe, wobei die Kupplungseinrichtung wenigstens eine für einen Betrieb unter Einwirkung eines Betriebsmediums vorgesehene oder/ und unter Vermittlung von Druckmedium betätigbare Kupplungsanordnung aufweist.

### [Stand der Technik]

Es wird hierbei insbesondere, aber nicht ausschließlich an eine nasslaufende Lamellen-Kupplungsanordnung gedacht. Ferner wird hierbei vor allem, aber nicht ausschließlich, an eine auf hydraulischem Wege betätigbare Kupplungsanordnung mit in die Kupplungseinrichtung integriertem hydraulischen Nehmerzylinder gedacht, wie sie beispielsweise in der EP 0 758 434 B1 oder in einer der von der Anmelderin getätigten, Mehrfach-Kupplungseinrichtungen (insbesondere Doppel-Kupplungseinrichtungen) betreffenden Patentanmeldungen offenbart ist. Es wird hierzu insbesondere auf die deutschen Patentanmeldungen 199 55 365.3 (AT 17.11.1999); 100 04 179.5, 100 04 186.8, 100 04 184.1, 100 04 189.2, 100 04 190.6, 100 04 195.7 (alle AT 01.02.2000); 100 34 730.4 (AT 17.07.2000) der Anmelderin verwiesen. Bei den Kupplungsanordnungen der in Bezug genommenen Kupplungseinrichtungen handelt es sich um nasslaufende Lamellen-Kupplungsanordnungen. Betreffend nasslaufende, auf hydraulischem Wege betätigte Lamellen-Kupplungsanordnungen kann ferner auf die DE 198 00 490 A1 verwiesen werden. Eine trockenlaufende, auf hydraulischem Wege betätigte Doppel-Kupplungseinrichtung ist aus der DE 35 26 630 A1 bekannt.

Betreffend die Art und Weise der Zufuhr von Betriebsmedium, ggf. eine Kühlflüssigkeit (insbesondere ein Kühlöl), zur Kupplungsanordnung bzw. zu mehrere Kupplungsanordnungen der Kupplungseinrichtung bestehen grundsätzlich viele Möglichkeiten. Dem Konstrukteur stellt sich die Aufgabe, einerseits die Kosten und den Bauraum möglichst klein zu halten und andererseits für einen guten Wirkungsgrad und damit einen geringen Energiebedarf für die Bereitstellung des Betriebsmediums zu sorgen. Unter Umständen sind auch noch andere Randbedingungen zu berücksichtigen. So ist im Falle einer Kupplungseinrichtung mit einer oder mehreren nasslaufenden und auf hydraulischem Wege betätigten Kupplungsanordnungen (insbesondere Lamellen-Kupplungsanordnungen) einerseits ein Hydraulikmediumstrom für die Ansteuerung der Kupplungseinrichtung bzw. der Kupplungseinrichtungen bereitzustellen, um die Kupplungseinrichtung bzw. die Kupplungseinrichtungen einzukuppeln (Kupplung des NORMALERWEISE-OFFEN-Typs) oder auszukuppeln (Kupplung des NORMALERWEISE-GESCHLOSSEN-Typs). Für das Einkuppeln bzw. Auskuppeln wird ein relativ geringer Volumenstrom auf relativ hohem Druck benötigt. Ferner wird für den Nasslaufbetrieb bzw. die Kühlung der Kupplungseinrichtungen ein großer Volumenstrom an Kühlmedium, insbesondere Kühlflüssigkeit (regelmäßig Kühlöl), benötigt, wobei ein Volumenstrom auf einem kleineren Druckniveau ausreicht oder sogar erforderlich ist.

Man könnte daran denken, zwei gesonderte Pumpen vorzusehen, die motorisch (etwas unter Ermittlung der Antriebseinheit oder/und des Getriebes) oder elektromotorisch angetrieben sind und von denen eine für die Bereitstellung des Druckmediumstroms zur Ansteuerung der Kupplungseinrichtung bzw. Kupplungseinrichtungen ausgelegt ist und die andere für die Bereitstellung des Betriebsmediumstroms ausgelegt ist. Diese Lösung ist vergleichsweise kostenaufwendig.

Nach einem anderen, in der DE 198 00 490 A1 beschriebenen Ansatz kann man eine Saugstrahlpumpe im Zuführbereich eines zur Kühlung einer Lamellen-Kupplungsanordnung dienenden Hydraulikfluids vorsehen, um hohe Durchflussraten und damit eine hohe Kühlleistung zu erzielen. Die Saugstrahlpumpe empfängt einen Hydraulikfluidstrom von einer Hydraulikpumpe, die einen für die Betätigung der Lamellen-Kupplungsanordnung ausreichenden Hydraulikdruck bereitstellt. Die Saugstrahlpumpe saugt zusätzliches Hydraulikfluid aus einem Ölsumpf an. Die Saugstrahlpumpe dient hierbei als Betriebsmediumbereitstellanordnung, welche den Betriebsmediumstrom bereitstellt, der im Druck gegenüber der Hydraulikpumpe reduziert ist und im Volumenstrom größer als der von der Hydraulikpumpe zur Saugstrahlpumpe fließende Druckölstrom. Weiterhin ist an einem Betätigungskolben der Kupplungsanordnung, welcher als Druckaufnahmeelement dient, ein Leitblech angeordnet, welches sich im Kühlölstrom befindet und sich mit dem Kolben verschiebt, wodurch der Kühlölstrom bei Verschieben des Kolbens gezielt von einem ersten Lamellenpaket der Kupplungsanordnung zu einem zweiten Lamellenpaket geleitet wird.

Wenn dieser Ansatz des Standes der Technik auch ermöglicht, dass die Hydraulikpumpe nicht für sehr hohe Förderleistungen ausgelegt sein muss und eine separate, motorisch angetriebene Pumpe für die Förderung des Kühlfluids entfallen kann, so ist der auf der Saugstrahlpumpe beruhende bekannte Ansatz insoweit nachteilig, als das auf Grund der hohen Wirbelverluste einer Saugstrahlpumpe der Wirkungsgrad der Saugstrahlpumpe vergleichsweise schlecht ist und dementsprechend der Energieverbrauch relativ hoch ist.

### [Darstellung der Erfindung]

Vor diesem Hintergrund wird ein Kupplungssystem vorgeschlagen, umfassend wenigstens eine Kupplungseinrichtung insbesondere für die Anordnung in einem Antriebsstrang (insbesondere eines Kraftfahrzeugs) zwischen einer Antriebseinheit und einem Getriebe, wobei die Kupplungseinrichtung wenigstens eine für einen Betrieb unter Einwirkung eines Betriebsmediums vorgesehene Kupplungsanordnung aufweist, der für diesen Betrieb Betriebsmedium zuführbar ist auf Grundlage einer Druckmedium bereitstellenden ersten Pumpenanordnung (diese wird im Folgenden auch primäre Pumpenanordnung genannt) und einer an der ersten Pumpenanordnung angeschlossenen, durch das von der ersten Pumpenanordnung bereitgestellte Druckmedium antreibbaren zweiten Pumpenanordnung (diese wird im Folgenden auch sekundäre Pumpenanordnung genannt), wobei die sekundäre Pumpenanordnung wenigstens ein in einem Gehäuse bewegbar angeordnetes, unter Vermittlung des Druckmediums (dieses wird im Folgenden auch Primärmedium genannt) antreibbares und mit dem Betriebsmedium (dieses wird im Folgenden auch Sekundärmedium genannt) wechselwirkendes Pumpenelement aufweist, das im Betrieb das Sekundärmedium (Betriebsmedium) durch Verdrängung oder/und Erteilung einer Beschleunigung oder/und Erteilung eines Dralls in Richtung zur Kupplungsanordnung fördert.

Ferner stellt die Erfindung ein Kupplungssystem bereit, umfassend wenigstens eine Kupplungseinrichtung insbesondere für die Anordnung in einem Antriebsstrang (insbesondere eines Kraftfahrzeugs) zwischen einer Antriebseinheit und einem Getriebe, wobei die Kupplungseinrichtung wenigstens eine unter Vermittlung von Druckmedium betätigbare Kupplungsanordnung aufweist, wobei das Druckmedium für die Betätigung bereitstellbar ist auf Grundlage einer Betriebsmedium bereitstellenden zweiten Pumpenanordnung (diese wird im Folgenden auch primäre Pumpenanordnung genannt), und einer an der zweiten Pumpenanordnung angeschlossenen, durch das von der zweiten Pumpenanordnung bereitgestellte Betriebsmedium antreibbaren ersten Pumpenanordnung (diese wird im Folgenden auch sekundäre Pumpenanordnung genannt), wobei die sekundäre Pumpenanordnung wenigstens ein in einem Gehäuse bewegbar angeordnetes, unter Vermittlung des Betriebsmediums (dieses wird im Folgenden auch Primärmedium genannt) antreibbares und mit dem Druckmedium (dieses wird im Folgenden auch Sekundärmedium genannt) wechselwirkendes Pumpenelement aufweist, das im Betrieb das Sekundärmedium (Druckmedium) durch Verdrängung oder/und Erteilung einer Beschleunigung oder/und Erteilung eines Dralls auf einen zur Kupplungsbetätigung hinreichenden Druck bringt.

In der Regel, jedenfalls im Falle eines flüssigen Betriebsmediums, wird die zweite Pumpenanordnung an einem Betriebsmediumreservoir angeschlossen sein und von diesem Betriebsmedium für die Zufuhr zur Kupplungsanordnung beziehen. Die zweite Pumpenanordnung kann das Betriebsmedium in einem Betriebsmediumstrom bereitstellen, der einen kleineren Druck als ein von der ersten Pumpenanordnung abgegebener Druck des Druckmediums aufweist und bezogen auf das im zeitlichen Mittel pro Zeiteinheit bereitgestellte Mediumvolumen größer ist als ein gegebenenfalls von der ersten Pumpenanordnung zur zweiten Pumpenanordnung fließender oder insgesamt im Dauerbetrieb von der ersten Pumpenanordnung bereitstellbarer Druckmediumstrom.

Betreffend den Antrieb der primären Pumpenanordnung wird vor allem daran gedacht, dass diese elektrisch oder/und unter Vermittlung der Antriebseinheit oder/und des Getriebes antreibbar ist.

Von der ersten und der zweiten Pumpenanordnung kann mindestens eine wenigstens eine hydrostatische Pumpe oder als Verdrängermaschine ausgebildete Pumpe umfassen. Es wird vor allem daran gedacht, dass die erste Pumpenanordnung wenigstens eine hydrostatische Pumpe oder als Verdrängermaschine ausgebildete Pumpe aufweist. Derartige Pumpen sind besonders dafür geeignet, hohe Drücke aufzubauen und können deshalb - um ein Beispiel zu nennen - vorteilhaft den zur Betätigung der Kupplungsanordnung gegebenenfalls benötigten Druck bereitstellen. Beispiele für, je nach den Anforderungen, geeignete Pumpen des genannten Typs sind Kolbenpumpen, insbesondere Axialkolbenpumpen und Radialkolbenpumpen, Zahnrad- und Zahnringpumpen, Flügetzellenpumpen, Schraubenpumpen und Sperrschieberpumpen. Ferner/Alternativ kann von der ersten und der zweiten Pumpenanordnung mindestens eine wenigstens eine hydrodynamische Pumpe oder als Strömungsmaschine ausgebildete Pumpe umfassen. Es wird insbesondere daran gedacht, dass die zweite Pumpenanordnung wenigstens eine durch das von der ersten Pumpenanordnung bereitgestellte Druckmedium antreibbare hydrodynamische Pumpe oder als Strömungsmaschine ausgebildete Pumpe aufweist. Derartige Pumpen sind insbesondere dafür geeignet, große Volumenströme bereitzustellen, so dass sich - sofern erforderlich - ohne Weiteres ein großer Volumenstrom an Betriebsmedium für die Zufuhr zur wenigstens einen Kupplungsanordnung bereitstellen lässt. Beispiele für Pumpen dieses Typs sind sogenannte Drallförderpumpen und Zentrifugal- oder Kreiselpumpen.

Für die oben genannte Anwendungssituation mit wenigstens einer hydraulisch betätigten nasslaufenden Lamellen-Kupplungsanordnung erscheint es auf Grund des für die Kupplungsbetätigung benötigten vergleichsweise hohen Drucks bei einem vergleichsweise geringen Volumenstroms einerseits und des für den Nasslaufbetrieb benötigten vergleichsweise hohen Volumenstroms bei einem vergleichsweise kleinen Druck andererseits vorteilhaft, wenn die erste Pumpenanordnung wenigstens eine hydrostatische Pumpe oder als Verdrängermaschine ausgebildete Pumpe umfasst und wenn die zweite Pumpenanordnung wenigstens eine hydrodynamische Pumpe oder als Strömungsmaschine ausgebildete Pumpe umfasst. Diese als besonders vorteilhaft angesehene Ausgestaltung des Kupplungssystems ist aber keineswegs zwingend.

Die Pumpe (der ersten bzw. zweiten Pumpenanordnung) kann wenigstens ein translatorisch oder rotatorisch antreibbares Pumpenelement aufweisen, das im Falle einer zur primären Pumpenanordnung zugehörigen Pumpe motorisch, insbesondere elektromotorisch, bzw. im Falle einer zur sekundären Pumpenanordnung zugehörigen Pumpe unter Vermittlung des Primärmediums antreibbar ist. Beispielsweise kann die sekundäre Pumpenanordnung wenigstens eine durch das von der primären Pumpenanordnung bereitgestellte Primärmedium antreibbare Kolbenpumpe aufweisen. Die Kolbenpumpe kann wenigstens einen in einem Pumpengehäuse längs einer Achse verschiebbar angeordneten Kolben mit einer dem Primärmedium ausgesetzten ersten Kolbenfläche und einer mit dem Sekundärmedium wechselwirkenden zweiten Kolbenfläche aufweisen. Die Kolbenflächen können an zueinander entgegengesetzten axialen Endbereichen des Kolbens angeordnet sein. Zur Ausnutzung bzw. Erzielung des gegebenenfalls hohen Druckniveaus des Druckmediums einerseits oder/und zur Erzielung bzw. Ausnutzung eines hohen Betriebsmediumfördervolumens andererseits kann es vorteilhaft sein, wenn die dem Druckmedium zugeordnete Kolbenfläche kleiner als die dem Betriebsmedium zugeordnete Kolbenfläche ist.

Ist nur ein Kolben vorgesehen, so wird die Pumpe auf Grund eines oszillierenden Kolbenbetriebs das Sekundärmedium in Impulsen abgeben, so dass die Pumpe auch als Impulsförderpumpe bezeichnet werden kann. Um einen zumindest näherungsweise kontinuierlichen Sekundärmediumstrom bereitzustellen oder/und auf die Oszillationsbewegung des Kolbens zurückgehende mechanische Schwingungen zu vermeiden, kann die sekundäre Pumpenanordnung mehrere Kolbenpumpen aufweisen, die mit gegeneinander versetzter Kolbenhubphase synchron betreibbar sind. Beispielsweise können eine erste Kolbenpumpe und eine zweite Kolbenpumpe mit gegeneinander um etwa 180° versetzter Kolbenhubphase synchron betreibbar sein. Ein derartiger gegenläufiger Betrieb der beiden Kolbenpumpen führt zu einer hinreichenden Kompensation bzw. Vermeidung der mechanischen Schwingungen.

Der Aufwand für die Ansteuerung der sekundären Pumpenanordnung ist dann besonders gering, wenn mittels einer zwischen die primäre Pumpenanordnung und die Kolbenpumpe der sekundären Pumpenanordnung geschalteten Ventilanordnung abwechselnd ein Ansaughub und ein Ausstoßhub der Kolbenpumpe auslösbar ist. Es können ein Hub oder beide Hübe vom Ansaughub und Ausstoßhub durch Anlegen von Primärmitteldruck an einem dem betreffenden Hub zugeordneten Ansteuereingang der Kolbenpumpe auslösbar sein. Die Kolbenpumpe kann eine bei einem Hub vom Ansaughub und vom Ausstoßhub unter zunehmende Spannung gesetzte Rückstellfederanordnung aufweisen.

Es wird vorgeschlagen, dass wenigstens ein Druckabbauventil vorgesehen ist, mittels dem ein an einem Ansteuereingang der Kolbenpumpe angelegter Primärmediumdruck durch Abfließenlassen von Primärmedium abbaubar ist, um den Ansaughub oder den Ausstoßhub der Kolbenpumpe auszulösen oder zuzulassen.

Der jeweils andere Hub vom Ansaughub und vom Ausstoßhub kann dann vermittels der auf den Kolben wirkenden Rückstellfederanordnung erfolgen. Ist die zwischen die primäre Pumpenanordnung und die Kolbenpumpe geschaltete Ventilanordnung vorgesehen, so kann diese das Druckabbauventil bilden oder dieses aufweisen. Bei dem Druckabbauventil kann es sich aber auch um ein gegenüber der genannten Ventilanordnung gesondertes Ventil handeln.

Besonders bevorzugt ist, dass das Druckabbauventil in die sekundäre Pumpenanordnung integriert ist. Auf diese Weise lassen sich die Strömungswiderstände von längeren Leitungen vermeiden, so dass der Primärmediumdruck besonders schnell abbaubar ist, wodurch eine besonders hohe Förderleistung für die Kolbenpumpe erreicht werden kann. Das Druckabbauventil kann unter Vermittlung einer Hubbewegung eines/des Kolbens der Kolbenpumpe mechanisch betätigbar oder/und unter Vermittlung von auf das Druckabbauventil wirkendem Primärmedium betätigbar sein. Hierzu wird weiterbildend vorgeschlagen, dass eine Mehrzahl von Ventilelementen des Druckabbauventils zwischen einer als Öffnungsstellung zu identifizierenden ersten Relativposition und einer als Schließstellung zu identifizierenden zweiten Relativstellung in Reaktion auf die Hubbewegung des Kolbens oder/und in Reaktion auf auf wenigstens eines der Ventilelemente wirkendenes Primärmedium verstellbar ist. Beispielsweise können ein erstes Ventilelement und ein zweites Ventilelement vorgesehen sein, die durch eine Vorspannfederanordnung in Richtung auf die Öffnungsstellung vorgespannt sind. Vorteilhaft kann der Kolben ein Ventilelement bilden.

Als besonders bevorzugt wird vorgeschlagen, dass das Druckabbauventil durch Anschlag eines mit dem Kolben eine Hubbewegung mitmachenden Ventilelements an einem Anschlag oder/und Betätigung des Druckabbauventils durch Anschlag des Kolbens an einem Betätigungsanschlag in eine/die Öffnungsstellung und durch auf wenigstens ein Ventilelement wirkendes Primärmedium in eine/die Schließstellung bringbar ist. Hierdurch kann gewissermaßen eine Zwangssteuerung des Druckabbauventils erreicht werden, so dass dieses nicht gesondert angesteuert werden muss.

Generell ist es für einen hohen Wirkungsgrad der sekundären Pumpenanordnung vorteilhaft, wenn diese mit wenigstens einem einen Rückfluss von Sekundärmedium aus der sekundären Pumpenanordnung (gegebenenfalls aus der Kolbenpumpe) zum Sekundärmediumreservoir oder/und mit wenigstens einem einen Rückfluss von Sekundärmedium von Seiten der Kupplungsanordnung in die sekundäre Pumpenanordnung (gegebenenfalls in die Kolbenpumpe) verhindernden Ventil, insbesondere einem Rückschlagventil, ausgeführt ist.

Nach einer vorteilhaften Ausführungsvariante weist die sekundäre Pumpenanordnung wenigstens eine durch das von der primären Pumpenanordnung bereitgestellte Primärmedium antreibbare Drallförderpumpe oder Zentrifugalpumpe (Kreiselpumpe) oder wenigstens eine durch das von der primären Pumpenanordnung bereitgestellte Primärmedium antreibbare rotatorische Verdrängerpumpe, ggf. Zahnradpumpe oder Zahnringpumpe, auf. Wie oben schon erwähnt, können Drallförderpumpen oder Zentrifugalpumpen vorteilhaft große Volumenströme bereitstellen, während Verdrängerpumpen besonders gut zur Bereitstellung höherer Drücke geeignet sind. Die Drallförderpumpe oder Zentrifugalpumpe bzw. die Verdrängerpumpe kann wenigstens einen Rotor aufweisen, der mit dem Sekundärmedium wechselwirkt. Der Rotor kann als wenigstens eine Schaufel oder wenigstens eine andere Strömungs- oder Fördergeometrie aufweisendes Laufrad ausgeführt sein.

Zum Antrieb des Rotors wird vorgeschlagen, dass dieser mittels eines Primärmedium von der primären Pumpenanordnung empfangenden Hydromotors antreibbar ist. Der Hydromotor kann als Strömungsmaschine (gegebenenfalls Turbine) oder Verdrängermaschine ausgebildet sein. Es wird beispielsweise an einen Zahnrad- oder Zahnringmotor, Kolbenmotor (insbesondere Radialkolbenmotor oder Axialkolbenmotor) und einen Flügelzellenmotor gedacht. Allgemein gesprochen kann der Hydromotor als hydrostatischer oder hydrodynamischer Motor ausgeführt sein.

Der Hydromotor kann beispielsweise als Umlaufverdrängermotor, ggf. als Zahnradmotor oder Zahnringmotor, ausgeführt sein.

Betreffend den hier verwendeten Begriffsteil "hydro" (vgl. den vorstehend erwähnten Hydromotor und die oben erwähnte hydrostatische Pumpe und hydrodynamische Pumpe) sei angemerkt, dass dieser Begriff nicht ausschließt, dass das Druckmedium oder/und das Betriebsmedium gasförmig ist. Der Begriff "Druckmedium" bezeichnet also allgemein ein Druckfluid und der Begriff "Betriebsmedium" bezeichnet also allgemein ein Betriebsfluid. Der Begriffsbestandteil "hydro" soll sich also auch auf Fluide beziehen; man könnte deshalb statt von einem "Hydromotor" und von einer "hydrodynamischen Pumpe" von einem "Fluidmotor" und einer "fluiddynamischen Pumpe" sprechen. In der Regel werden das Druckmedium und das Betriebsmedium aber flüssig sein und können dann als "Druckflüssigkeit" bzw. "Betriebsflüssigkeit" bezeichnet werden.

Der mit dem Sekundärmedium wechselwirkende Rotor oder/und der Rotor des Hydromotors kann eine Scheibe oder/und eine Welle mit einer Strömungsgeometrieanordnung, gegebenenfalls einer Schaufel anordnung, umfassen. Hinsichtlich der Ausbildung der Drallförderpumpe oder Zentrifugalpumpe kommen diverse Konstruktionen in Betracht. Beispielsweise kann die Drallförderpumpe oder Zentrifugalpumpe derart ausgestaltet sein, dass das geförderte Sekundärmedium den Rotor in im Wesentlichen axialer oder radialer/tangentialer Richtung anströmt und vom Rotor in im Wesentlichen axialer oder radialer/tangentialer Richtung abströmt. Entsprechendes gilt für den Hydromotor. Dieser kann derart ausgebildet sein, dass das Primärmedium den Rotor in im Wesentlichen axialer oder radialer/tangentialer Richtung anströmt und vom Rotor in im Wesentlichen axialer oder radialer/ tangentialer Richtung abströmt.

Sowohl für die eigentliche Pumpe als auch für den Hydromotor ist es vorteilhaft, wenn zum im Wesentlichen radialen/tangentialen Anströmen des betreffenden Rotors oder/und zum im Wesentlichen radialen/tangentialen Abströmen vom betreffenden Rotor eine Mehrzahl von in Bezug auf den Rotor im Wesentlichen rotationssymmetrisch angeordneten Anströmkanälen bzw. Abströmkanälen in einem den Rotor beherbergenden Gehäuse vorgesehen sind. Dem Rotor zugeordnete Lager brauchen dann nur vergleichsweise geringe Radialkräfte aufzunehmen und es wird für einen vergleichsweise reibungsarmen Lauf des Rotors gesorgt.

Eine vorteilhafte Ausgestaltung zeichnet sich dadurch aus, dass wenigstens ein mit dem Primärmedium wechselwirkender Rotor und wenigstens ein mit dem Sekundärmedium wechselwirkender Rotor zueinander im Wesentlichen koaxiale Drehachsen aufweisen. Hierzu wird weiterbildend vorgeschlagen, dass wenigstens ein Betriebsmediumstrom zumindest bereichsweise als wenigstens einen Druckmediumstrom oder/und den mit dem Druckmediumstrom wechselwirkenden Rotor umgebender Ringstrom in im Wesentlichen axialer Richtung geführt ist. Der Druckmediumstrom und der Betriebsmediumstrom können in einen gemeinsamen Mediumstrom übergehen, der beispielsweise der Kupplungseinrichtung als Betriebsmediumstrom zugeführt wird. Die Zusammenführung eines Druckmedienstroms und des Betriebsmediumstroms und die Zuführung des zusammengeführten Mediumstroms zur Kupplungseinrichtung, insbesondere zur Kupplungsanordnung, kann auch bei den anderen, vorangehend beschriebenen Ausgestaltungen vorgesehen sein, und zwar für alle angesprochenen Aspekte der Erfindung. Hierdurch kann beispielsweise erreicht werden, dass im Falle eines bei tieferen Temperaturen zähfließenden Betriebsmediums (Betriebsflüssigkeit, insbesondere Kühlöl) eine gewisse Mindestzufuhr an Betriebsmedium zur Kupplungseinrichtung gewährleistet wird.

Eine vorteilhafte Ausführungsform zeichnet sich dadurch aus, dass die sekundäre Pumpenanordnung wenigstens zwei mit dem Sekundärmedium wechselwirkende, nicht zueinander koaxial angeordnete Rotoren oder/und dass der Hydromotor wenigstens zwei mit dem Primärmedium wechselwirkende, nicht zueinander koaxial angeordnete Rotoren aufweist. Diese Bauart ist besonders zweckmäßig für eine nach dem Verdrängerprinzip arbeitende sekundäre Pumpenanordnung bzw. einen nach dem Verdrängerprinzip arbeitenden Hydromotor.

Betreffend den Hydromotor wird weiterbildend vorgeschlagen, dass eine Antriebsformation, ggf. Verzahnung, eines ersten Rotors des Hydromotors mit einer Antriebsformation, ggf. Verzahnung, eines zweiten Rotors des Hydromotors kämmt. Betreffend die sekundäre Pumpenanordnung wird weiterbildend vorgeschlagen, dass eine Förderformation, ggf. Verzahnung, eines ersten Rotors der sekundären Pumpenanordnung mit einer Förderformation, ggf. Verzahnung, eines zweiten Rotors der sekundären Pumpenanordnung kämmt.

Häufig wird es zweckmäßig sein, wenn wenigstens ein mit dem Primärmedium wechselwirkende Rotor des Hydromotors und wenigstens ein mit dem Sekundärmedium wechselwirkender Rotor der sekundären Pumpenanordnung über wenigstens eine gemeinsame Welle miteinander verkoppelt sind, die wenigstens einem Rotor des Hydromotors und wenigstens einem Rotor der sekundären Pumpenanordnung gemeinsam ist. Dies ist aber keinesfalls zwingend. Es kann auch vorgesehen sein, dass ein Rotor des Hydromotors und ein Rotor der sekundären Pumpenanordnung auf einer gemeinsamen Welle angeordnet sind, während ein weiterer Rotor des Hydromotors und ein weiterer Rotor der sekundären Pumpenanordnung jeweils auf einer eigenen Welle angeordnet sind, die nicht zwingend miteinander drehgekoppelt sein müssen, solange eine Verkopplung über die erstgenannten Rotoren gegeben ist.

Die Kupplungseinrichtung (bzw. die Kupplungsanordnung) kann im Bezug auf das Betriebsmedium selbstsaugend sein. Es ist dann vorteilhaft, wenn die zweite Pumpenanordnung in einem Nichtbetrieb-Zustand von der Kupplungseinrichtung (bzw. von der Kupplungsanordnung) angesaugtes Betriebsmedium zu dieser durchlässt. Dies ermöglicht beispielsweise einen Notbetrieb, wenn die zweite Pumpenanordnung defekt ist. Auch könnte man unter Umständen daran denken, zur Einsparung von Energie die zweite Pumpenanordnung für bestimmte Betriebszustände des Kupplungssystems bzw. des Antriebsstrangs außer Betrieb zu setzen, also in den Nichtbetrieb-Zustand zu versetzen.

Es wurde schon mehrfach angesprochen, dass die Kupplungsanordnung unter Vermittlung von Druckmedium betätigbar sein kann. Hierzu wird man die Pumpenanordnung bzw. die erste Pumpenanordnung dafür auslegen, Druckmittel bei einem zur Betätigung der Kupplungsanordnung hinreichenden Druck bereitzustellen.

Zur Klarstellung sei noch darauf hingewiesen, dass es sich auch bei der Kupplungseinrichtung der Erfindung um eine Kupplungseinrichtung handeln kann, die für einen Betrieb unter Einwirkung des von der Pumpenanordnung bzw. von der zweiten Pumpenanordnung bereitgestellten Betriebsmedium vorgesehen ist.

Es wurde schon deutlich, dass vor allem daran gedacht wird, dass die Kupplungsanordnung eine nasslaufende Kupplungsanordnung ist, dass der Betrieb unter Einwirkung des Betriebsmediums ein nasslaufender Betrieb ist und dass das Betriebsmedium eine Betriebsflüssigkeit, gegebenenfalls eine Kühlflüssigkeit, ist. Als in Frage kommende nasslaufende Kupplungsanordnung wird vor allem an eine Lamellen-Kupplungsanordnung gedacht.

Das Druckmedium kann ein hydraulisches Druckmedium, insbesondere ein Hydrauliköl sein, das gegebenenfalls auch als Kühlflüssigkeit dient.

Die Kupplungseinrichtung kann eine Mehrfach-Kupplungseinrichtung mit mehreren Kupplungsanordnungen sein, beispielsweise eine Doppel-Kupplungseinrichtung mit zwei jeweils einer Getriebe-Eingangswelle zugeordneten Kupplungsanordnungen. Es wird hierzu insbesondere auf die in den oben aufgeführten Patentanmeldungen der Anmelderin offenbarten Konstruktionen verwiesen.

Es kann zweckmäßig sein, das Kupplungssystem derart auszubilden, dass der Kupplungsanordnung Betriebsmedium unter Vermittlung eines an der Betriebsmediumbere'rtstellanordnung bzw. der Pumpenanordnung bzw. der zweiten Pumpenanordnung angeschlossenen oder anschließbaren Betriebsmediumspeichers zuführbar ist. Ferner kann eine Ausgestaltung derart vorteilhaft sein, dass die Kupplungsanordnung unter Vermittlung eines an der Pumpenanordnung bzw. der Druckmediumbereitstellanordnung bzw. der ersten Pumpenanordnung angeschlossenen oder anschließbaren Druckmediumspeichers betätigbar ist.

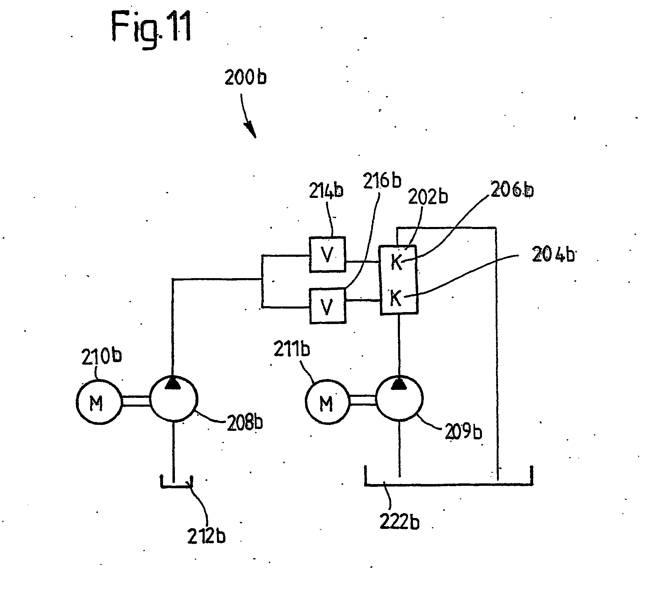

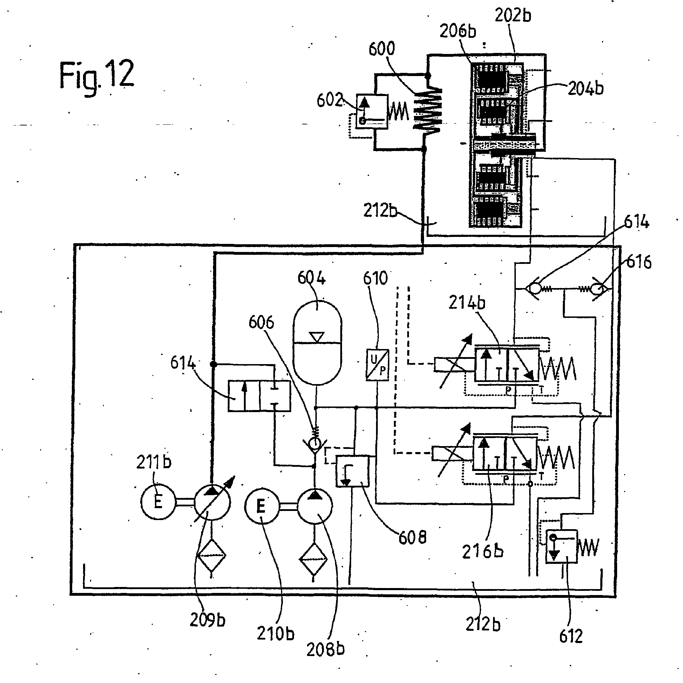

Die Erfindung wird im Folgenden anhand mehreren in den Figuren gezeigten Ausführungsbeispielen erläutert, die nicht als den Bereich der Erfindung beschränkend anzusehen sind. Es wird darauf hingewiesen, dass die Beispiele gemäß Fig. 11 und 12 in erster Linie den oben angesprochenen Ansatz mit zwei gesonderten Pumpen erläutern, von dem sich die vorstehend behandelten Erfindungsaspekte absetzen. Diese Beispiele können aber gleichwohl zur Erläuterung der Erfindungsaspekte beitragen und Ausgestaltungsmöglichkeiten eines erfindungsgemäßen Kupplungssystems aufzeigen.
- Fig. 1: zeigt schematisch ein Ausführungsbeispiel eines Kupplungssystems, das eine nasslaufende Doppelkupplung aufweist.
- Fig. 2: zeigt in einer geschnittenen Ansicht ein Kolbengerät, das als Druckumsetzer bzw. Pumpe einsetzbar ist und als Komponente P der Anordnung gemäß Fig. 1 Verwendung finden kann.
- Fig. 3: zeigt in einer teilgeschnittenen Ansicht ein Rotorgerät, das als Druckumsetzer bzw. Pumpe eingesetzt werden kann und als Komponente P der Anordnung gemäß Fig. 1 Verwendung finden kann.
- Fig. 4: zeigt in einer teilgeschnittenen Axialansicht gemäß Sichtrichtung IV in Fig. 3 einen durch Druckfluid angetriebenen Rotor des Rotorgeräts samt einem Druckfluid-Zuführkanal und einem Druckfluid-Abführkanal.
- Fig. 5: zeigt in einer Fig. 4 entsprechenden Darstellung eine Variante des durch Druckfluid angetriebenen Rotors mit zwei symmetrisch im Bezug auf eine Drehachse des Rotors angeordneten Druckfluid-Zuführkanälen und zwei Druckfluid-Abführkanälen.
- Fig. 6: zeigt in einer Schnittdarstellung gemäß Schnittlinie VI-VI in Fig. 3 einen Betriebsfluid fördernden Rotor des Rotorgeräts, der unter Vermittlung des Rotors der Fig. 4 oder 5 und einer Drehverkopplung der beiden Rotoren durch das Druckfluid angetrieben wird.
- Fig. 7: zeigt in einer teilgeschnittenen Darstellung eine Ansicht auf den Rotor der Fig. 6 gemäß Sichtrichtung VII in Fig. 3.
- Fig. 8: zeigt ein weiteres Ausführungsbeispiel eines Rotorgeräts, das als Pumpe bzw. Druckumsetzer dienen kann und als Komponente P in der Anordnung gemäß Fig. 1 einsetzbar ist.
- Fig. 9: zeigt in einer schematischen Darstellung ein weiteres Ausführungsbeispiel eines Kupplungssystems, das eine nasslaufende Doppelkupplung aufweist.
- Fig. 10: zeigt in einer geschnittenen Ansicht ein Kolbengerät, das als Druckumsetzer bzw. Pumpe einsetzbar ist und als Komponente P der Anordnung gemäß Fig. 9 Verwendung finden kann.
- Fig. 11: zeigt in einer schematischen Darstellung ein nicht erfindungsgemäßes Ausführungsbeispiel eines Kupplungssystems mit zwei einer nasslaufenden Doppelkupplung zugeordneten, elektromotorisch angetriebenen Pumpen.
- Fig. 12: zeigt ein Beispiel, wie ein Kupplungssystem der Fig. 11 entsprechenden Art konkreter ausgeführt sein könnte.
- Fig. 13: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen, die Bestandteil eines erfindungsgemäßen Kupplungssystems sein könnte.
- Fig. 14: zeigt in einer teilgeschnittenen Ansicht ein weiteres Beispiel eines Rotorgeräts, das als Druckumsetzer bzw. Pumpe eingesetzt werden kann und als Komponente P der Anordnung gemäß Fig. 1 oder als Komponente P der Anordnung gemäß Fig. 9 Verwendung finden kann.

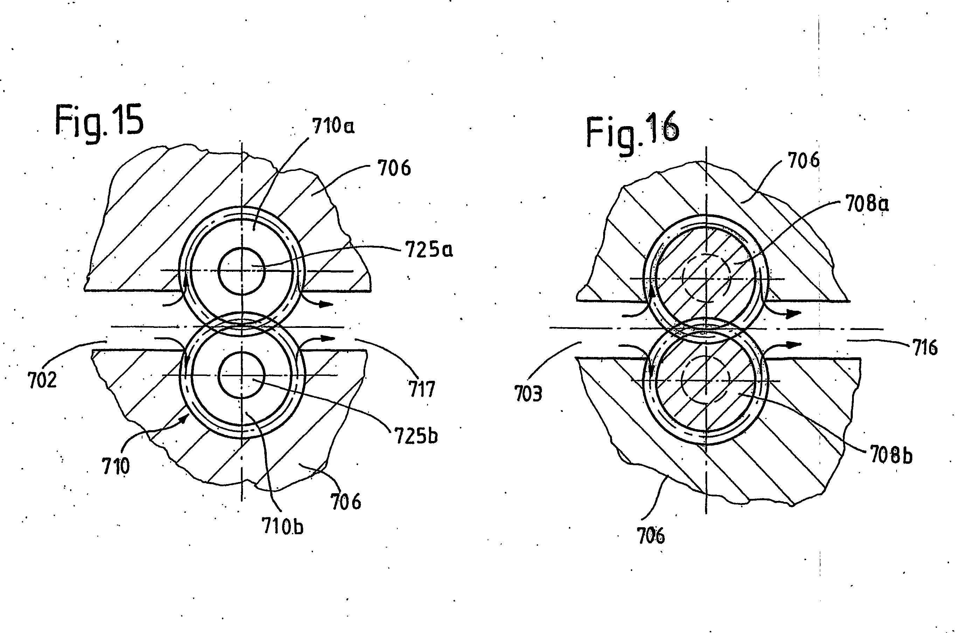

- Fig. 15: zeigt das Rotorgerät der Fig. 14 in einer teilgeschnittenen Ansicht nach Schnittlinie XV-XV.
- Fig. 16: zeigt das Rotorgerät der Fig. 14 in einer Schnittdarstellung nach Schnittlinie XVI-XVI.
- Fig. 17: zeigt eine geteilte Dichtscheibe des Rotorgeräts in einer axialen Draufsicht.
- Fig. 18: zeigt in einer schematischen teilgeschnittenen Ansicht eine Ausführungsvariante des Rotorgeräts der Fig. 14.

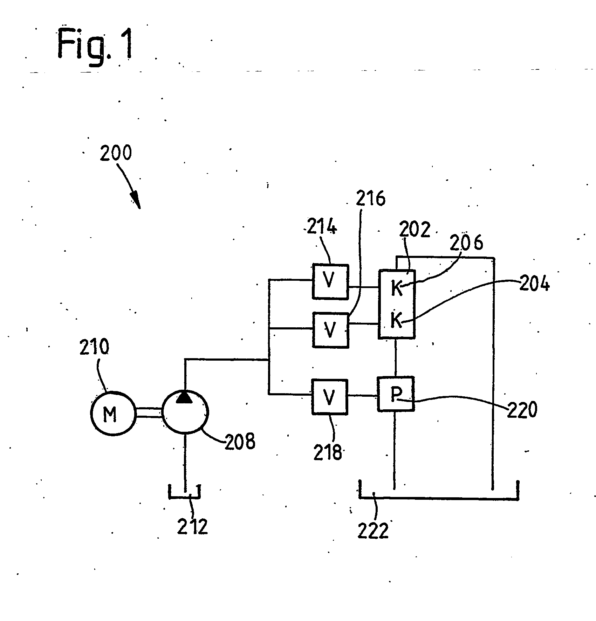

Fig. 1 zeigt schematisch ein Kupplungssystem 200, das eine nasslaufende Doppelkupplung 202 mit einer ersten, radial inneren Kupplungseinrichtung 204 und einer zweiten, radial äußeren Kupplungseinrichtung 206 aufweist. Bei den Kupplungseinrichtungen 204 und 206 handelt es sich um nasslaufende Kupplungseinrichtungen, beispielsweise um nasslaufende Lamellen-Kupplungseinrichtungen, die auf an sich bekannte Weise jeweils wenigstens ein Lamellenpaket aufweisen, die beim vorliegenden Ausführungsbeispiel radial übereinander angeordnet sind und jeweils durch einen zugeordneten Betätigungskolben eines in die Doppelkupplung integrierten hydraulischen Nehmerzylinders betätigt werden. Beispiele für derartige Doppelkupplungen sind in der EP 0 758 434 B1 und in den oben identifizierten deutschen Patentanmeldungen der Anmelderin offenbart.

Ein grundsätzliches Problem bei derartigen Kupplungen ist, dass zum Betätigen der Kupplungseinrichtungen, speziell der Lamellenpakete, in der Regel ein hoher Druck bei geringem Volumenstrom benötigt wird, während zum Nasslaufbetrieb der Kupplungseinrichtungen, insbesondere zur Kühlung der Lamellenpakete, ein geringer Druck mit hohem Volumenstrom erforderlich ist. Um die beiden vorgenannten, gegensätzlichen Anforderungen erfüllen zu können, kann man zwei unterschiedliche, voneinander unabhängige Pumpen vorsehen, was allerdings sowohl wegen des hohen Raumbedarfs konstruktiv problematisch als auch wegen vergleichsweise hoher Kosten wirtschaftlich problematisch sein kann, je nach Art und Antrieb der Pumpen.

Demgegenüber ist bei der Anordnung gemäß Fig. 1 eine Pumpe 208 vorgesehen, die durch einen Elektromotor 210 angetrieben wird und aus einem Hydraulikreservoir 212 Hydraulikmedium (insbesondere Hydrauliköl) absaugt, das zu Ventilen 214, 216 und 218 weitergeleitet wird. Die Pumpe 208 erzeugt einen hinreichend hohen Druck, der zum Betätigen der Kupplungseinrichtungen 204, 206 zuverlässig ausreicht, so dass, sobald eines der Ventile 214 und 216 auf Durchlass geschaltet wird, die zugeordnete Kupplungseinrichtung betätigt wird, im Falle einer NORMALERWEISE-OFFEN-Kupplung gemäß dem Ventilzustand des betreffenden Ventils eingekuppelt bzw. im Falle einer NORMALERWEISE-GESCHLOSSEN-Kupplung gemäß dem Ventilzustand des betreffenden Ventils ausgekuppelt wird.

Dem Ventil 218 obliegt die Aufgabe, zusammen mit der mit 220 bezeichneten Komponente P den eingangsseitig am Ventil 218 anliegenden Druck bei kleinem Volumenstrom in einen niedrigen Druck mit größerem Volumenstrom umzuformen. Die von dem Ventil 218 und der Komponente P (220) gebildete Baugruppe hat demgemäss druckumsetzende Eigenschaften. Um einen größeren Volumenstrom am Betriebsmedium, hier Kühlöl bereitstellen zu können, ist die Komponente P an einem Ölreservoir 222 angeschlossen. Es sei angemerkt, dass es nicht zwingend ist, dass es sich bei dem Reservoir 222 um ein gegenüber dem Reservoir 212 gesondertes Reservoir handelt. Die Komponente P stellt wenigstens einen Betriebsmediumstrom, hier Kühlölstrom, bereit, der zu den Kupplungseinrichtungen 204, 206, insbesondere zu deren Lamellenpaketen im Falle des hier zu Grunde gelegten Beispiels, geleitet wird.

Man mag deshalb die Komponente P oder die von der Komponente P und dem Ventil 218 gebildete Baugruppe als Pumpenanordnung ansehen. Im Folgenden werden Ausführungsbeispiele von als Komponente P einsetzbaren Geräten erläutert. Soweit diese Geräte im Folgenden als "Pumpe" oder "Pumpenanordnung" bezeichnet werden, soll hierdurch der Erfindungsgegenstand in keiner Weise festgelegt oder eingeschränkt werden. Es steht aber außer Frage, dass die Komponente P auf Grundlage von wenigstens einer Pumpe bzw. einer Pumpenanordnung realisiert werden kann, entsprechend einem Aspekt der Erfindung. Ein weiterer Aspekt der Erfindung bezieht sich auf die gemäß der Anordnung der Fig. 1 erzielte Druckumsetzung des vergleichsweise hohen, von der Pumpe 208 bereitgestellten Kupplungsbetätigungsdrucks in einen niedrigeren Druck bei größerem Volumenstrom für die Kupplungskühlung.

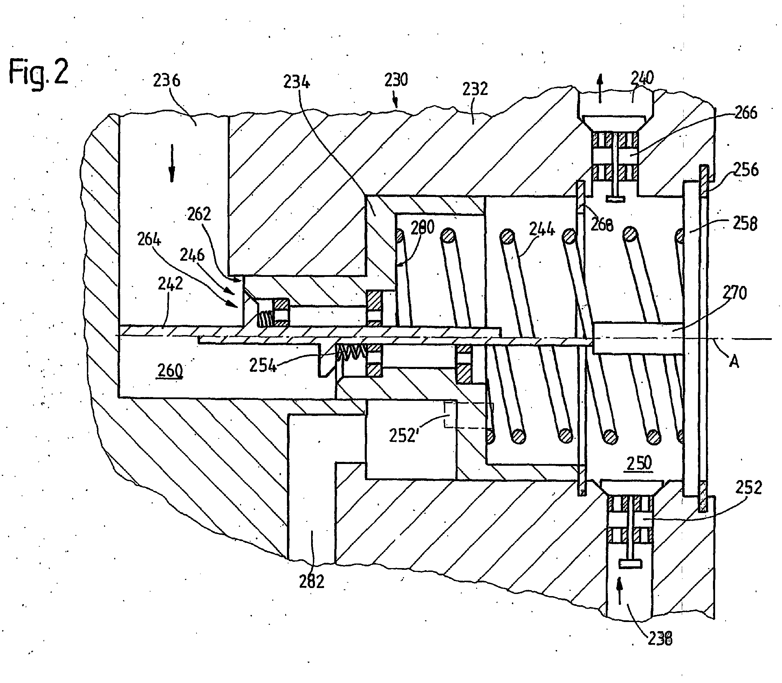

Fig. 2 zeigt ein als Komponente P einsetzbares Kolbengerät 230, das einen in einem Gehäuse 232 gelagerten, längs einer Achse A verschiebbaren Kolben 234 aufweist. Das Kolbengerät 230 weist einen Anschluss 236 auf, an dem das als Komponente P dienende Kolbengerät am Ventil 218 angeschlossen ist. Über einen weiteren Anschluss 238 ist das Kolbengerät am Reservoir 222 angeschlossen. Über einen dritten Anschluss 240 wird die Doppelkupplung 202 mit dem Kühlöl versorgt.

Fig. 2 zeigt den Kolben 234 und ein mit diesem zusammenwirkendes Ventilelement 242 in zwei verschiedenen Positionen, von denen die eine in der oberhalb der Achse A liegenden Halbebene und die andere in der unterhalb der Achse A liegenden Halbebene dargestellt ist. Die in der oberen Halbebene dargestellte Stellung des Kolbens und des Ventilelements nehmen der Kolben 234 und das Ventilelement 242 am Ende eines unter der Wirkung einer Rückstellfeder 244 durchgeführten, als "Ansaughub" identifizierbaren Hubs des Kolbens 234 und des mit diesem mitbewegten Ventilelements 242 ein. Ein von dem Kolben 234 und dem Ventilelement 242 gebildetes Druckabbauventil 246 ist geschlossen und ein Innenraum 250 des Kolbengeräts ist mit über den Anschluss 138 und ein Rückschlagventil 252 angesaugtes Kühlöl gefüllt. Der Kolben 234 und das Ventilelement 242 sind durch eine Ventilfeder 254 in Öffnungsrichtung des Druckabbauventils 246 gegeneinander vorgespannt. Der Kolben 234 und das Ventilelement 242 nehmen aber die Schließstellung ein, da das Ventilelement 242 mit einem Ventilschaft an einem Gehäuseabschnitt angestoßen ist und die Federkraft des Rückstellventils 244 ausreicht, den Kolben 234 gegen die Wirkung der Feder 254 in eine Anschlagposition zu verstellen, in der der Kolben 234 mit einem sich in radialer Richtung erstreckenden Kolbenabschnitt am Gehäuse anschlägt und in Zusammenwirkung mit dem Ventilelement 242 das Druckabbauventil 246 schließt. Die vorzugsweise direkt am genannten Kolbenabschnitt angreifende Feder 244 ist an einer durch einen Sprengring 256 am Gehäuse 232 gehaltenen, den Innenraum 250 verschließenden Verschlussplatte 258 abgestützt.

Die in der oberen Halbebene gezeigte Kolben- und Ventilstellung wird dann eingenommen, wenn in einem weiteren Innenraum 260 des Kolbengeräts ein vergleichsweise geringer Druck herrscht, so dass die Rückstellfeder 244 den Kolben 234 und das Ventilelement 242 in die dargestellten Anschlagpositionen bringen kann. Das Ventil 218 ist dann geschlossen. Wird durch Schalten des, im einfachsten Fall als Sitzventil ausgeführten Ventils 218 über den Anschluss 236 von der Pumpe 208 bereitgestelltes Drucköl mit vergleichsweise hohem Druck in den Innenraum 260 geleitet, so wirkt dieses auf eine erste Kolbenfläche 262 des Kolbens und eine zugeordnete Druckaufnahmefläche 264 des Ventilelement 242. Da vom Drucköl im Innenraum 260 auf die Druckaufnahmefläche 264 ausgeübte Kräfte über die Ventilfeder 254 und eine formschlüssige, das Druckablassventil 246 schließende Anlage des Kolbens 234 und des Ventilelements 242 aneinander auf den Kolben 234 abgeleitet werden, kann man die eigentliche Kolbenfläche bzw. Druckaufnahmefläche 262 des Kolbens einerseits und die Druckaufnahmefläche 264 des Ventilelements 242 andererseits gemeinsam in Form einer einzigen effektiven, dem Drucköl zugeordneten Kolbenfläche berücksichtigen.

Das Drucköl im Innenraum 260 verschiebt den Kolben 234 und das Ventilelement 242 gemeinsam gegen die Wirkung der Rückstellfeder 244 in Richtung zur Verschlussplatte 258. Hierbei wird Kühlöl aus dem Innenraum 250 über ein Rückschlagventil 266 und den Anschluss 240 in Richtung zur Doppelkupplung 202 verdrängt. Der Kolben 234 vollführt also einen "Ausstoßhub". Dieser Ausstoßhub ist beendet, wenn der Kolben 234 an einem in der Art eines Sprengrings im Inneren des Innenraums 250 am Gehäuse 232 gehaltenen Anschlagring 268 anschlägt. Kurz vor dem Anschlag des Kolbens 234 am Anschlagring 268 ist der Ventilschaft des Ventilelements 242 an einem an der Verschlussplatte 258 angeordneten Anschlagzapfen 270 angeschlagen, so dass das Ventilelement 242 den restlichen Ausstoßhub mit dem Kolben 234 nicht mitmachen kann. Der Druck des Drucköls im Innenraum 260 ist ausreichend, dass das auf die erste Kolbenfläche 262 wirkende Drucköl den Kolben 234 unter Zurücklassen des Ventilelements 242 in seiner Anschlagposition bis zum Anschlag des Kolbens 234 am Anschlagring 268 bewegt wird. Das zuvor durch das Drucköl in dem Innenraum 260 entgegen der Wirkung der Ventilfeder 254 in seiner Schließstellung gehaltene Druckabbauventil 246 öffnet sich hierdurch, so dass Drucköl aus dem Innenraum 260 durch einen zwischen dem Kolben 234 und dem Steg des Ventilelements 242 abgebildeten Durchlasskanal in den Innenraum 250 abfließen kann. Diese Situation ist in der unteren Halbebene von Fig. 2 gezeigt; es ist ein Durchlass zwischen einem die Druckaufnahmefläche 264 aufweisenden Ringflansch und einem zugeordneten Endabschnitt des Kolbens 234 zu erkennen. Die in der unteren Halbebene gezeigte Kolben- und Ventilstellung oder eine etwas andere, einem sich einstellenden Druck- und Kräftegleichgewicht entsprechende Stellung wird so lange eingenommen, wie über das Ventil 218 und den Anschluss 236 Drucköl in den Innenraum 260 nachgeliefert wird. Wird nun das Ventil 218 geschlossen, so setzt unter der Wirkung der Rückstellfeder 244 die dem "Ansaughub" entsprechende Rückstellbewegung des Kolbens 234 und des Ventilelements 242 in die in der oberen Halbebene gezeigte Stellung ein. Das Druckabbauventil 246 bleibt dabei unter der Wirkung der Ventilfeder 254 so lange offen, bis der Ventilschaft des Ventilelements 242 am Gehäuse anschlägt. Bei diesem "Ansaughub" wird wiederum Kühlöl aus dem Reservoir 222 angesaugt.

Das Kolbengerät gemäß Fig. 2 hat druckumsetzende Eigenschaften. Der Kolben weist auf Seiten des Innenraums 250 eine zweite Kolbenfläche 280 auf, die deutlich größer als die erste Kolbenfläche 262 bzw. die von der ersten Kolbenfläche 262 und der Druckaufnahmefläche 264 gebildete effektive Kolbenfläche ist. Aufgrund der anderen effektiven Kolbenfläche auf Seiten des von der Pumpe 208 bezogenen Drucköls und der größeren Kolbenfläche auf Seiten des vom Reservoir 222 bezogenen Kühlöls kann ein großer Druck im Innenraum 260 einen kleinen Druck im Innenraum 250 ausbalancieren, wobei zusätzlich auch noch die von der Rückstellfeder 254 auf den Kolben 234 ausgeübten Kräfte zu berücksichtigen sind. Im praktischen Betrieb des Kolbengeräts braucht ein derartiger Gleichgewichtszustand nicht auftreten, der Druck im Innenraum 250 kann je nach Flusswiderstand durch das Rückschlagventil 266, den Anschluss 240, eine Ölverbindung zur Doppelkupplung 206 und einem effektiven Strömungswiderstand der Doppelkupplung 202 und einer Rückführleitung in das Reservoir 222 während des gesamten Ausstoßhubs bei geschlossenem Druckabbauventil wesentlich kleiner sein als ein einer Druckumsetzung gemäß den Kolbenflächen entsprechender Gleichgewichtsdruck.

Das Kolbengerät ermöglicht, dass unter Vermittlung der kleinen druckölseitigen Kolbenfläche und des hohen Drucköldrucks und unter Vermittlung der großen, kühlölseitigen Kolbenfläche bei kleinem Druck eine größere Volumenmenge zur Kühlung der Kupplung gefördert werden kann, als über das Ventil 218 an Drucköl zum Kolbengerät zugeführt wird. Erwähnt werden sollte noch, dass in Fig. 2 eine Druckausgleichsöffnung 282 im Gehäuse 238 vorgesehen ist, die am Reservoir 222 angeschlossen ist, um ein unterdruckbedingtes Verharren des Kolbens 234 in seiner in der oberen Halteebene gezeigten Anschlagstellung zu verhindern.

Das Rückschlagventil 252 dient dazu, einen Rückfluss von Kühlöl aus dem Innenraum 250 in das Reservoir 222 zu verhindern. Dieses Rückschlagventil könnte alternativ auch im Kolben ausgebildet sein, wie bei 252' gestrichelt angedeutet ist. In diesem Falle wird ein der Druckausgleichsöffnung 282 zugeordneter Anschluss des Kolbengeräts ausreichen und der Anschluss 238 wäre entbehrlich. Das Rückschlagventil 266 verhindert einen Rückfluss von Kühlöl von Seiten der Doppelkupplung in den Innenraum 250.

Für eine ständige Frischölversorgung der Doppelkupplung arbeitet das Kolbengerät mit hin- und heroszillierendem Kolben und dementsprechend einer impulsförmigen Abgabe von Frischöl zur Doppelkupplung. Man mag das Kolbengerät deshalb auch als Impulsförderpumpe bezeichnen. Bedingt durch die Oszillationsbewegung des Kolbens können unter Umständen Schwingungen entstehen. Um dem abzuhelfen, kann man zwei Kolbengeräte etwa der Art der Fig. 2 parallelschalten und gegenläufig betreiben, also mit um 180° versetzter Phase des Kolbenhubs. Selbstverständlich kann man beide Kolbengeräte mit einem einzigen, beiden Geräten gemeinsamen Gehäuse und mit gemeinsamen Anschlüssen ausführen. Es ist für eine gleichförmigere Frischölversorgung auch möglich, mehr als zwei Kolbengeräte parallelzuschalten und mit gegeneinander versetzten Hubphasen zu betreiben.

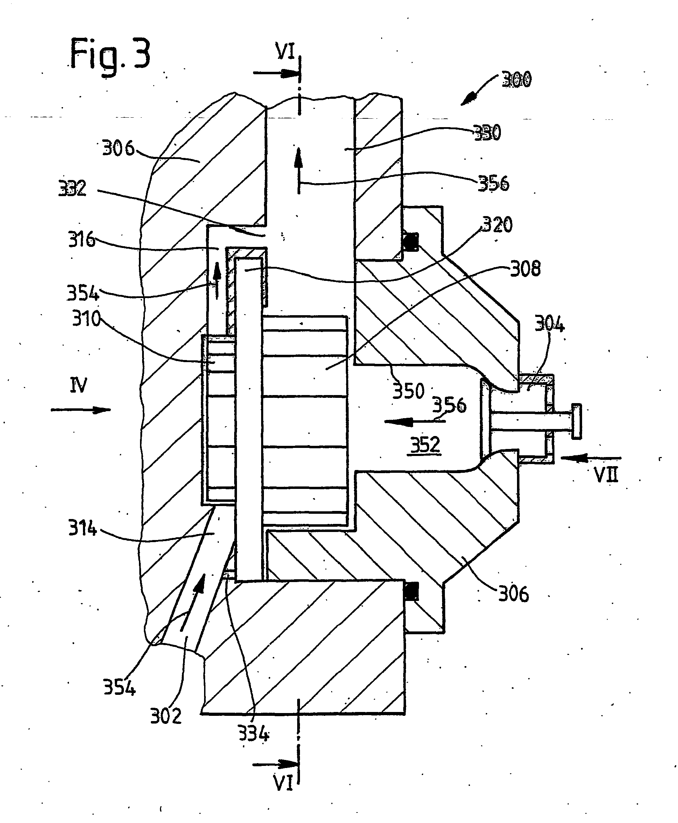

Fig. 3 zeigt ein Rotorgerät 300, das als Komponente P (220) in der Anordnung gemäß Fig. 1 einsetzbar ist. Das Rotorgerät weist wenigstens einen über das Ventil 218 oder direkt an der Pumpe 208 angeschlossenen Druckmittelanschluss 302 und einen in der Figur nicht dargestellten, am Reservoir 222 angeschlossenen Kühlölanschluss auf, von dem Kühlöl über ein Rückschlagventil 304 in ein mehrteilig ausgeführtes Gehäuse 306 des Rotorgeräts 300 fließen kann hin zu einem wenigstens eine Fördergeometrie, beispielsweise in Schaufelform, aufweisenden Förderrotor 308.

Über den Anschluss 302 in das Gehäuse 306 einströmendes Drucköl strömt wenigstens einen Antriebsrotor 310 an, der mit wenigstens einer Impuls- oder Drehimpulsaufnahmegeometrie, beispielsweise in Schaufelform, ausgeführt ist und durch das Drucköl in Drehung versetzt wird.

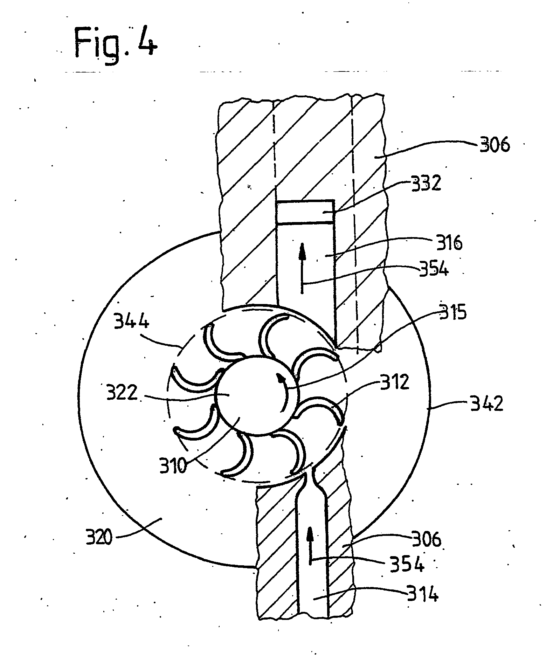

Fig. 4 zeigt eine Möglichkeit der Ausbildung des Antriebsrotors 310 im Detail. Es ist eine Mehrzahl von Schaufelgeometrien 312 zu erkennen. Das durch einen Zufuhrkanal 314 auf die Schaufelgeometrien 312 gerichtete Drucköl versetzt den Rotor 310 in Drehung in der durch den Pfeil 315 angegebenen Richtung. Nach Wechselwirkung mit dem Rotor strömt das Drucköl, das nun einen Teil seiner Energie abgegeben hat, über einen Abflusskanal 316 ab.

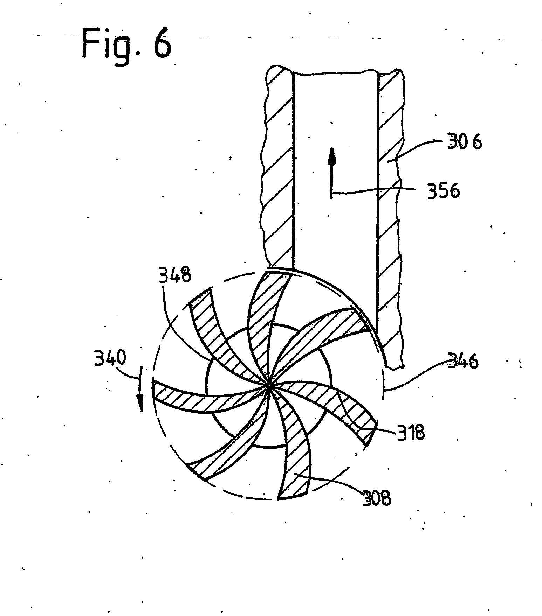

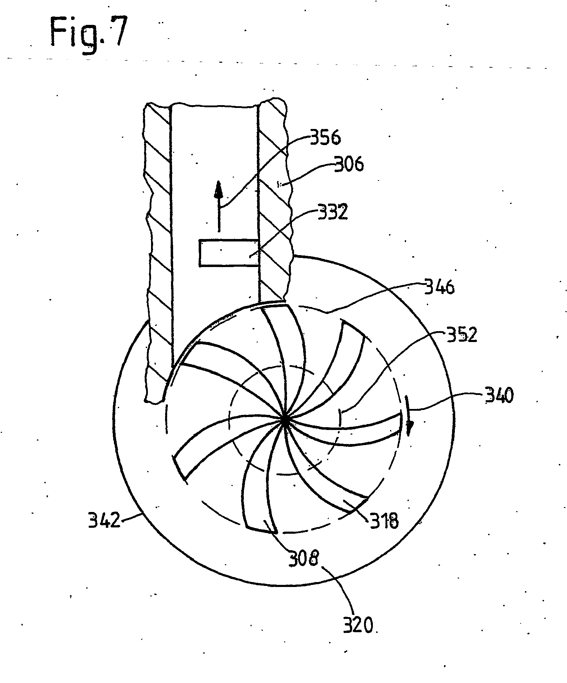

Der Förderrotor 308 ist mit dem Antriebsrotor 310 drehfest verbunden. Fig. 6 und Fig. 7 zeigen ein Beispiel für die Ausbildung der Fördergeometrien, die hier schaufelförmig sind. Man kann auch von Förderschaufeln 318 sprechen. Beim vorliegenden Ausführungsbeispiel sind die Schaufelgeometrien 312 des Antriebsrotors und die Fördergeometrien 318 des Förderrotors an einer Drehscheibe 320 angeordnet, die im Gehäuse 306 radial und axial gelagert ist. Die Scheibe 320 einerseits und der von den Schaufelgeometrien 312 und einem Nabenabschnitt 322 gebildete Antriebsrotor 310 und der von den Schaufelgeometrien 318 gebildete Förderrotor 308 andererseits können einteilig oder mehrteilig ausgeführt sein. Beispielsweise kommt eine Herstellung als einteiliges Kunststoffteil in Betracht.

Gemäß dem Vorstehenden wird der Förderrotor 308 durch das über den Kanal 314 den Antriebsrotor 310 anströmende Drucköl unter Vermittlung des Antriebsrotors drehangetrieben. Die Drehung des Förderrotors 208 erzeugt einen Kühlölstrom aus dem Reservoir 222 über den zugeordneten Anschluss des Rotorgeräts, das Rückschlagventil 304 zum Förderrotor 308, und das mit dem Förderrotor wechselwirkende Kühlöl wird über einen Abflusskanal 330 und einen der Doppelkupplung 202 zugeordneten Anschluss des Kolbengeräts zur Doppelkupplung 302, genauer zu deren Kupplungseinrichtungen 204 und 206 geführt. Die Förderwirkung des Förderrotors 308 beruht auf der Erteilung eines Dralls an das Kühlöl oder/und auf Fliehkraftwirkung des unter Vermittlung des Förderrotors beschleunigten Kühlöls, so dass das Rotorgerät 300 auch als Drallförderpumpe, hier speziell als Kreiselpumpe oder Zentrifugalpumpe, bezeichnet werden kann.

Der das Drucköl führende Abflusskanal 316 mündet bei 332 in den Zuführkanal 330, so dass das Drucköl zusammen mit dem Kühlöl zur Doppelkupplung 202 gefördert wird. Im Falle des gezeigten Ausführungsbeispiels handelt es sich bei dem von der Pumpe 208 zugeführten Drucköl einerseits und dem aus dem Reservoir 222 zur Doppelkupplung 202 geförderten Kühlöl andererseits um das gleiche Medium, nämlich ein Hydrauliköl.

Die Fördergeometrien, hier Schaufelgeometrien 318, sind derart gestaltet, dass bei einer Drehbewegung des Förderrotors 308 große Volumenströme durch die Doppelkupplung 202 gefördert werden können und dass bei stillstehendem Förderrotor 308 im Falle einer selbstsaugenden Kupplung weiterhin Kühlöl vom Reservoir 222 durch das Rotorgerät 300 hin zur Doppelkupplung 202 fließen kann.

Beim gezeigten Ausführungsbeispiel werden die Schaufelgeometrien 312 des Antriebsrotors 310 radial bzw. tangential vom Drucköl angeströmt und das Drucköl strömt von den Schaufelgeometrien 312 tangential oder radial ab. Die Schaufelgeometrien 318 des Förderrotors 308 werden vom angesaugten Kühlöl axial angeströmt und das Kühlöl strömt in radialer Richtung ab. Es sind auch andere Strömungsverhältnisse möglich. Beispielsweise kann der Antriebsrotor axial angeströmt werden.

Auf vergleichsweise kostenaufwendige Gleitlager oder Wälzlager für die Lagerung der Rotoren kann verzichtet werden, wenn eine Schmierfilmlagerung vorgesehen ist. Die Ausbildung des Rotorgeräts kann derart sein, dass sich ein entsprechender Schmierfilm zwangsläufig auf Grund der Drehbewegung, etwa auf Grund eines hydrodynamischen Effekts, aufbaut. Es können aber auch Zuführöffnungen vorgesehen sein, über die kleine Mengen an Drucköl oder/und Kühlöl an die zu schmierenden Stellen geleitet wird. Eine derartige Öffnung ist bei 334 dargestellt.

Für eine besonders reibungsarme Lagerung kann die zur Lagerung der Rotorendienende Drehscheibe 320 an ihrem Umfang oder/und an ihren axialen Endflächen mit einer reibungsvermindernden Beschichtung, beispielsweise PTFE, versehen sein. Hierdurch wird insbesondere der Übergang von der Haft- zur Gleitreibung beschleunigt.

Zum besseren Verständnis der Figuren soll noch auf Folgendes hingewiesen werden. Die dem Förderrotor 308 erteilte Drehbewegung ist in Fig. 6 und 7 durch den Pfeil 340 repräsentiert. Die Kreislinie 342 repräsentiert den Außenumfang der Drehscheibe 320. Die gestrichelten Kreislinien 344 und 346 repräsentieren keine konstruktiven Details des Rotorgeräts 300, sondern entsprechend der Drehbewegungsbahn der radial äußeren Schaufelenden des Antriebsrotors bzw. des Förderrotors. Die Kreislinie 348 repräsentiert den Innenumfang 350 eines Kühlölkanals 352 im Inneren des Gehäuses 306, der Kühlöl vom Rückschlagventil 304 zum Förderrotor 308 zuführt. Die radiale Lage dieses Innenumfangs ist in Fig. 7 auch durch eine gestrichelte Kreislinie 352 gezeigt. Die Pfeile 354 zeigen die Fließrichtung des Drucköls zum Antriebsrotor 310 und von diesem weg an. Die Pfeile 356 stellen die Fließrichtung des Kühlöls zum Förderrotor 308 hin und von diesem weg dar.

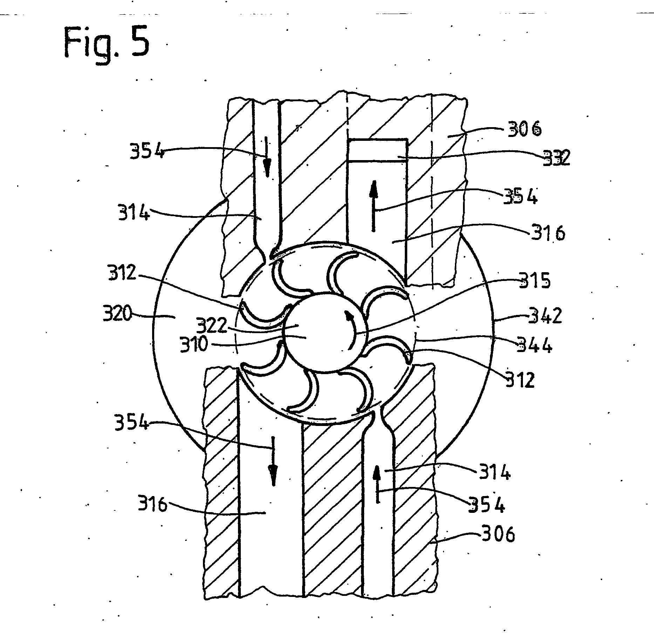

Um einen möglichst reibungsarmen Anlauf des Antriebsrotors 310 zu gewährleisten, kann man eine rotationssymmetrische Anströmung des Antriebsrotors 310 bzw. dessen Schaufelgeometrien 312 vorsehen. Gemäß einer in Fig. 5 gezeigten Ausführungsvariante sind zwei um etwa 180° versetzte Zuführkanäle 314 und zwei um etwa 180° gegeneinander versetzte Abflusskanäle 316 im Gehäuse 306 ausgeführt. Man könnte beispielsweise auch drei um 120° versetzte Zuführkanäle, vier um 90° gegeneinander versetzte Zuführkanäle usw. vorsehen.

Zur Funktion des Rückschlagventils 304 ist noch auf Folgendes hinzuweisen. Das Rückschlagventil 304 sorgt generell dafür, dass kein Öl aus dem Rotorgerät in das Reservoir (Ausgleichsbehälter) 222 fließt. Insbesondere wird verhindert, dass beim Anlaufen des Rotorgeräts kein über den Anschluss 302 zum Antriebsrotor 310, und von diesem über den Abflusskanal 316 in den Kanal 360 fließendes Drucköl in das Reservoir 222 abfließt. Es ist nämlich so, dass bei tiefen Temperaturen das Kühlöl im Reservoir 222 recht zähflüssig sein kann und deshalb unter Umständen, etwa nach einem längeren Stehen des Kraftfahrzeugs, nicht sofort in hinreichender Menge angesaugt werden kann. Das in den Kanal 360 fließende Drucköl sorgt dann für eine Mindestversorgung der Kupplungseinrichtung mit kühlendem Medium.

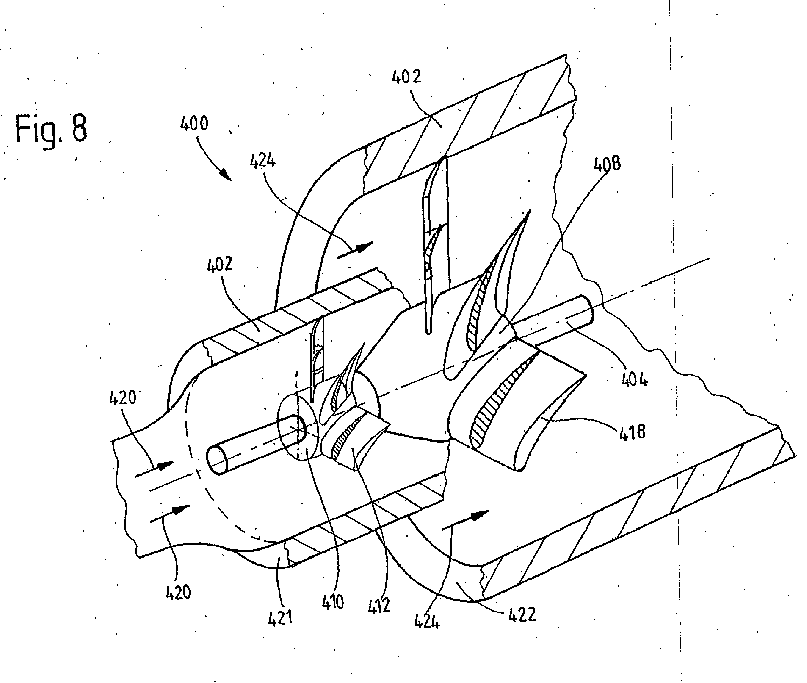

Ein weiteres, als Komponente P (220) in der Anordnung gemäß Fig. 1 einsetzbares Rotorgerät 400 ist in Fig. 8 perspektivisch dargestellt. Das Rotorgerät 400 weist eine in einem Gehäuse 402 drehbar gelagerte Drehwelle 404 auf. Die Drehwelle 404 trägt drehfest wenigstens einen Antriebsrotor 410 mit Impuls- oder Drehimpulsaufnahmegeometrien, hier speziell Schaufelgeometrien 412, und wenigstens einen Förderrotor 408 mit Fördergeometrien, hier speziell Schaufelgeometrien 418. Der Antriebsrotor 410 ist einer Antriebs-Hochdruckturbine zugehörig und wird axial von Drucköl angeströmt, wie durch die Pfeile 420 angedeutet. Bezug nehmend auf die Anordnung gemäß Fig. 1 wird dieses einen relativ hohen Druck aufweisende Drucköl von der Pumpe 208 bereitgestellt, die über das Ventil 218 oder direkt an einem dem Antriebsrotor 410 zugeordneten Anschluss des Rotorgeräts 400 angeschlossen ist.

Das Gehäuse 402 weist einen radial inneren Zylinder 421 und einen radial äußeren Zylinder 422 auf. Der innere Zylinder 421 nimmt den Antriebsrotor 410 auf und führt das Drucköl in einem axialen Strom zum Antriebsrotor 410 hin. Zwischen dem äußeren Zylinder 422 und dem inneren Zylinder 421 ist ein durch Pfeile 424 repräsentierter Kühlöl-Druckstrom axial zum jenseits einem axialen Ende des inneren Zylinders 421 angeordneten Förderrotor 408 geführt, dessen Schaufelgeometrien 418 sich weiter nach radial außen erstrecken als der Außenumfang des inneren Zylinders 421. Das Drucköl, das den Antriebsrotor 410 passiert hat, tritt aus dem inneren Zylinder 421 aus und strömt im Bereich des Förderrotors 408 mit dem Kühlöl zusammen.

Neben den in Fig. 8 gezeigten, auch als Laufräder bezeichenbaren Rotoren 408 und 410 können noch gehäusestationäre Leiteinrichtungen vorgesehen sein, um einerseits die kinetische Energie des Drucköls effizient für den Antrieb des Antriebsrotors 310 und damit (über die Welle 404) des Förderrotors 208 auszunutzen und das Kühlöl unter Vermittlung des Förderrotors 408 effizient zu fördern. Beim gezeigten Ausführungsbeispiel beruht die Förderwirkung des sich drehenden Förderrotors darauf, dass dem Drucköl ein Drall erteilt wird. Man kann demgemäß davon sprechen, dass der Förderrotor 408 eine Drallförderpumpe bildet.

In entsprechender Weise, wie beim Rotorgerät 300 können die die Rotoren lagernden Radial- und Axiallager, also die die Welle 404 lagernden Radial- und Axiallager, eine sich zwangsweise bei der Drehbewegung, insbesondere hydrodynamisch aufbauende Schmierfilmlagerung vorsehen. Man kann auch eine Zwangsschmierung durch Zufuhr von Drucköl oder/und Kühlöl vorsehen. Auch für die Ausführungsform der Fig. 8 ist eine Beschichtung etwa der Lagerabschnitte der Drehwelle 404 zur Verminderung der Reibung, beispielsweise eine PTFE-Beschichtung vorteilhaft, um das Mischreibungsgebiet beim Hochfahren schneller zu durchfahren.

Durch die Schaufelgeometrien 418 des Förderrotors 308 kann bei stillstehendem Förderrotor durch eine selbstansaugende Doppelkupplung angesaugtes Förderöl ohne übermäßigen Strömungswiderstand hindurchfließen.

Es soll noch auf einen wichtigen Unterschied zwischen der Ausführungsform gemäß Fig. 2 einerseits und den Ausführungsformen gemäß Figuren 3 bis 8 andererseits hingewiesen werden. Das Kolbengerät 230 arbeitet betreffend die Förderung des Kühlöls als hydrostatische Pumpe oder - in einer anderen Betrachtungsweise - als Verdrängungsmaschine. Demgegenüber arbeiten die betreffend die Förderung des Kühlöls als Drallförderpumpen bezeichenbaren Rotorgeräte 300 und 400 als hydrodynamische Pumpen bzw. - in einer anderen Betrachtungsweise - als Strömungsmaschinen. Solche hydrodynamischen Pumpen bzw. Strömungsmaschinen sind besonders gut dafür geeignet, hohe Volumenströme zu erzeugen, während hydrostatische Pumpen bzw. Verdrängungsmaschinen, speziell Kolbenpumpen bzw. Kolbenmaschinen für die Erzeugung hoher Volumenströme nicht unbedingt erste Wahl sind. Da andererseits hydrostatische Pumpen bzw. Verdrängungsmaschinen, insbesondere Kolbenpumpen, für die Erzeugung hoher Drücke in der Regel besser geeignet sind als hydrodynamische Pumpen bzw. Strömungsmaschinen, ist bei einer besonders bevorzugten Ausgestaltung der Anordnung gemäß Fig. 1 die das Drucköl bereitstellende Pumpe 208 als hydrostatische Pumpe bzw. Verdrängungsmaschine ausgebildet.

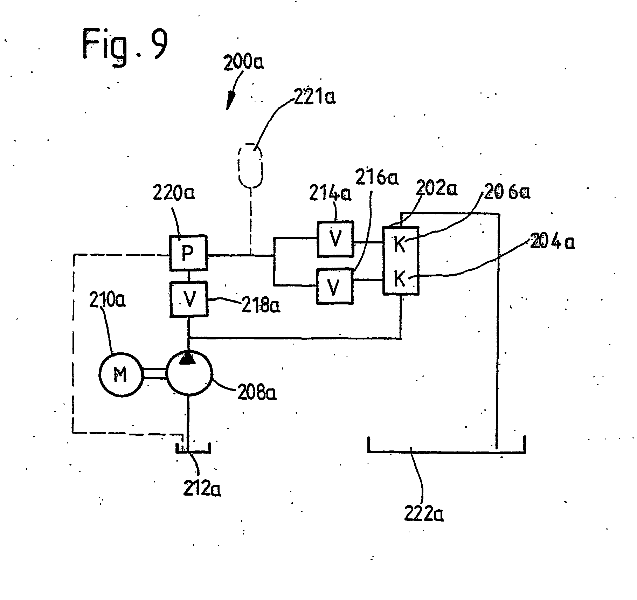

Bei den vorangehend beschriebenen Ausführungsbeispielen wird unter Vermittlung eines einen vergleichsweise hohen Druck aufweisenden Druckmediums, insbesondere Drucköls und eines vergleichsweise kleinen Volumenstromes dieses Druckmediums ein vergleichsweise großer, auf vergleichsweise niedrigem Druck stehender Kühlmediumstrom, insbesondere Kühlölstrom, erzeugt. Umgekehrt kann man auch unter Vermittlung eines Kühlmediumstroms, insbesondere Kühlölstroms bei vergleichsweise kleinem Druck einen (ggf. vergleichsweise kleineren) Druckmediumstrom, insbesondere Druckölstrom, mit vergleichsweise hohem Druck erzeugen, indem ein entsprechender Druckumsetzer eingesetzt wird. Fig. 9 zeigt ein entsprechendes Ausführungsbeispiel für ein erfindungsgemäßes Kupplungssystem. Hier ist die durch den Elektromotor 210a angetriebene Pumpe 208a dafür ausgelegt, einen großvolumigen Kühlölstrom für die Kühlung der Kupplungsanordnungen 204a und 206a der Doppelkupplung 202a bereitzustellen, wobei die Pumpe 208a einen Kühlöldruck erzeugt, der hinsichtlich des Drucks zur Betätigung der Kupplungseinrichtungen 204a und 206a nicht ausreichen würde. An der Kühlölpumpe 208a ist, gegebenenfalls über ein Ventil 218a, ein Druckumsetzer 220a (Bauteil P) angeschlossen, der unter der Einwirkung des Kühlöls Drucköl auf einem zur Betätigung der Kupplungseinrichtungen 204a und 206a hinreichenden Druckniveau bereitstellt. Hierzu sind die Kupplungseinrichtungen über die Ventile 214a und 216a am Bauteil P angeschlossen. Das Bauteil P kann mittels einer gesonderten Leitung am Reservoir 112a angeschlossen sein, um Hydrauliköl hieraus anzusaugen oder/und Hydrauliköl in das Reservoir abzugeben, je nach Konstruktion und Funktionsweise des Bauteils P. Grundsätzlich kann das Bauteil P in analoger Weise wie anhand des Kolbengeräts 230 und den Rotorgeräten 300 und 400 erläutert als Verdrängungsmaschine oder Strömungsmaschine, gegebenenfalls hydrostatische Pumpe oder hydrodynamische Pumpe ausgeführt sein, wobei allerdings ein kleiner Eingangsdruck in einen hohen Ausgangsdruck umgesetzt wird. Eine Möglichkeit wäre, das Bauteil P als Kolbengerät ähnlich dem Kolbengerät 230 auszubilden, wobei eine große Kolbenfläche dem Kühlöl zugeordnet ist und eine kleine Kolbenfläche dem unter Druck zu setzenden Drucköl.

Da für die Kühlung der Doppelkupplung ein vergleichsweise großer Volumenstrom benötigt wird, kann die Pumpe 208a vorteilhaft als hydrodynamische Pumpe ausgebildet sein.

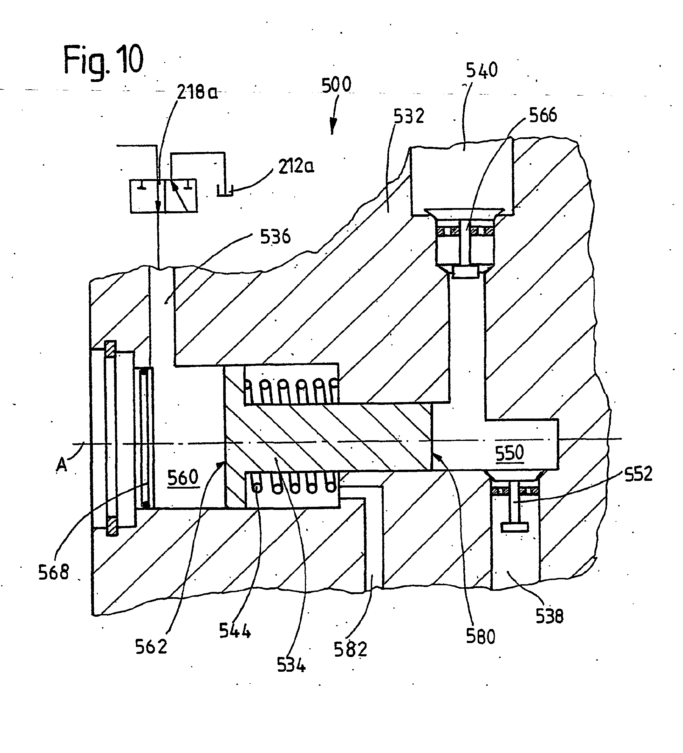

Fig. 10 zeigt ein als Bauteil P in der Anordnung gemäß Fig. 9 einsetzbares Kolbengerät 500, das an einem Anschluss 536 beispielsweise an dem Ventil 218a der Anordnung gemäß Fig. 9 angeschlossen ist. Es werden im Folgenden zur Beschreibung des Kolbengeräts 500 die Bezugszeichen des in Fig. 2 dargestellten Kolbengeräts 230 verwendet, jeweils unter Addition des Werts 300. Es kann deshalb die vorangehende Beschreibung des Kolbengeräts 230 leicht auf das Kolbengerät 500 angewendet werden, und es werden hier nur die Unterschiede zum Kolbengerät 230 erläutert.

Das Kolbengerät ist über seinen Anschluss 536 und das Ventil 218a an der Kühlölpumpe 408a angeschlossen. Das Ventil 218a lässt demgemäß Kühlöl entsprechend dem von der Pumpe 208a erzeugten Druck in den Innenraum 560 ein zur Herbeiführung eines "Ausstoßhubs" entgegen der Wirkung der Rückstellfeder 544 und lässt zum Abbau des Drucks im Innenraum 560 darin enthaltendes Kühlöl ins Reservoir 212a ab, um einen "Ansaughub" unter der Wirkung der Rückstellfeder 544 anzustoßen bzw. zuzulassen. Beim Ansaughub wird über den Anschluss 538 und das Rückschlagventil 552 Hydrauliköl beispielsweise aus einem der Reservoire 112a und 222a in den Innenraum 550 angesaugt. Beim Ausstoßhub wird dann entsprechend der axialen Verlagerung des Kolbens 534 Hydrauliköl aus dem Innenraum 550 über das Rückschlagventil 566 und den Anschluss 540 als Drucköl einem Betätigungs-Druckölkreis zugeführt, der mit einem Druckölreservoir ausgeführt sein kann, um für die Kupplungsbetätigung ein gleichmäßiges Druckniveau bereitzustellen. In Fig. 9 ist gestrichelt ein derartiges Reservoir 221 a als Ausgestaltungsmöglichkeit des Kupplungssystems angedeutet. Dieses Reservoir kann ohne Weiteres auch der Komponente P baulich oder/und funktionsmäßig zugeordnet, beispielsweise in die Komponente P integriert sein.

Der Kolben 534 weist eine dem Kühlöl im Innenraum 560 ausgesetzte erste Kolbenfläche 562 auf, die deutlich größer ist als die am anderen Kolbenende angeordnete zweite Kolbenfläche, die dem im Innenraum 550 enthaltenen, zur Kupplungsbetätigung bereitzustellenden Hydrauliköl ausgesetzt ist. Es kann deshalb, auch unter Berücksichtigung der von der Rückstellfeder 544 auf den Kolben ausgeübten Axialkräfte, der vergleichsweise niedrige Druck im Innenraum 560 in einen vergleichsweise hohen Druck im Innenraum 550 umgesetzt werden, so dass das über den Anschluss 540 abfließende Drucköl auf einem Druckniveau liegt, das zur zuverlässigen Betätigung einer oder beider Kupplungsanordnungen 204a und 206b ausreicht.

Fig. 11 veranschaulicht ein nicht erfindungsgemäßes Ausführungsbeispiel eines auf einen anderen Ansatz beruhenden Kupplungssystems mit zwei voneinander unabhängigen Pumpen. Es sind eine erste Pumpe 208b und eine zweite Pumpe 209b vorgesehen, die jeweils durch einen Elektromotor 210b bzw. 211 b angetrieben werden. Die erste elektromotorisch angetriebene Pumpe 208b, die vorzugsweise als hydrostatische Pumpe bzw. Verdrängungsmaschine ausgeführt ist, stellt Druckmedium, insbesondere Drucköl, bei einem vergleichsweise hohen Druck bereit, der zur Betätigung der Kupplungseinrichtungen 204b und 206b der Doppelkupplung 202b ausreicht. Zur wahlweisen Betätigung der Kupplungseinrichtungen sind diese jeweils über ein zugeordnetes Ventil 214b bzw. 216b an der Pumpe 208b angeschlossen.

Die zweite elektromotorisch angetriebene Pumpe 209b, die vorzugsweise als hydrodynamische Pumpe bzw. Strömungsmaschine ausgeführt ist, stellt einen vergleichsweise großen Volumenstrom an Kühlmedium, insbesondere Kühlöl bereit, das zur Kühlung der Kupplungseinrichtungen 204b und 206b ausreicht. Der von der Pumpe 209b abgegebene Druck kann deutlich kleiner sein als der von der Pumpe 208b abgegebene Druck.

Ein weiteres nicht erfindungsgemäßes Ausführungsbeispiel mit zwei voneinander unabhängig angetriebenen, vorzugsweise elektromotorisch angetriebenen Pumpen ist in Fig. 12 gezeigt. Soweit die verschiedenen Komponenten des Kupplungssystems der Fig. 12 den Komponenten der Anordnung gemäß Fig. 11 entsprechen, werden die Bezugszeichen der Fig. 11 auch für Fig. 12 verwendet.

Entsprechend der grundsätzlichen Erkenntnis, dass die Kühlung der Doppelkupplung 202b einen hohen Volumenstrom bei vergleichsweise geringem Druck benötigt, ist die elektrisch angetriebene Pumpe 209b vorzugsweise eine hydrodynamische Pumpe, beispielsweise eine Kreiselpumpe. Da die Kupplungsanordnungen in der Regel nur beim Halten oder beim Anfahren sehr stark gekühlt werden müssen, ist es sinnvoll, diese Pumpe derart auszubilden und anzusteuern, dass die Drehzahl entsprechend dem Kühlungsbedarf gesteuert oder geregelt wird, wie in Fig. 12 durch ein Pumpensymbol mit Pfeil angedeutet ist. Es lassen sich mit einer hydrodynamischen Pumpe, insbesondere Kreiselpumpe, sehr hohe Förderströme erzielen. Beispielsweise steigt bei einer üblichen Kreiselpumpe der Förderstrom proportional zum Quadrat der Pumpendrehzahl an.

Gemäß Fig. 12 wird das Kühlöl der Doppelkupplung 202b über einen Wärmetauscher 600 zugeführt, da es beispielsweise im Falle eines längeren Schlupfbetriebs zu einer merklichen Temperaturerhöhung auch des Öls im Ölsumpf 212b kommen kann. Durch den Wärmetauscher 600 wird die Öltemperatur auf einem zur Kühlung der Doppelkupplung hinreichenden Temperaturniveau gehalten. Da das Kühlöl bei tieferen Temperaturen recht dickflüssig werden kann und aufgrund des Strömungswiderstands des Wärmetauschers 600 bei besonders tiefen Temperaturen unter Umständen nicht mehr genügend Kühlöl die Doppelkupplung erreichen würde, ist ein beispielsweise unter Federvorspannung stehendes Bypassventil 602 vorgesehen, das dann, wenn der Kühlöldruck stromabwärts des Ölkühlers 600 eine vorgegebene Druckschwelle übersteigt, aufmacht und das Kühlöl am Ölkühler 600 vorbei zur Doppelkupplung durchlässt.

Wie schon ausgeführt, wird zur Betätigung der Betätigungskolben der beiden Kupplungseinrichtungen 204b und 206b ein vergleichsweise geringer Volumenstrom bei relativ hohem Druck benötigt. Dementsprechend handelt es sich bei der elektromotorisch angetriebenen Pumpe 208b vorzugsweise um eine hydrostatische Pumpe, z. B. eine Zahnradpumpe oder Flügelzellenpumpe.

Beim Ausführungsbeispiel der Fig. 12 ist im Kupplungsbetätigungs-Druckölkreis ein ein unter Druck stehendes Gaspolster aufweisender Druckölspeicher 604 eingebaut, der von der Pumpe 208b über ein Rückschlagventil 606 geladen wird und über das Ventil 214b und das Ventil 216b an den Betätigungs-Nehmerzylindern der beiden Kupplungseinrichtungen 204b und 206b angeschlossen ist. Der Druckölspeicher 604 sorgt für ein gleichmäßiges Druckniveau, was insbesondere im Falle einer Ausbildung der Pumpe 208b als Kolbenpumpe zweckmäßig ist, und ermöglicht, dass für die Pumpe 208b eine Pumpe mit besonders kleinem Fördervolumen ausreicht. Das von der Pumpe 208b pro Zeiteinheit abgegebene Ölvolumen kann also kleiner sein als das während einer Kupplungsbetätigung pro Zeiteinheit benötigte Druckölvolumen.

Der Druckölkreis zwischen dem Rückschlagventil 606 und den Ventilen 214b und 216b ist durch ein Druckbegrenzungsventil 608 gegen einen übermäßig hohen, ggf. zu Beschädigungen führenden Druck des Drucköls gesichert. Der durch den Füllzustand des Speichers 604 bestimmte Druck in diesem Druckölkreis wird durch einen Drucksensor 610 erfasst.

Ein weiteres Druckbegrenzungsventil 612 sorgt dafür, dass der jenseits den Ventilen 214b und 216b herrschende, auf die hydraulischen Nehmerzylinder der Kupplungseinrichtungen wirkende Druck einen Maximalwert nicht übersteigt, beispielsweise um ebenfalls Beschädigungen vorzubeugen. Über zwei Rückschlagventile 614 und 616 wird erreicht, dass ein Druckbegrenzungsventil ausreicht, um den Betätigungsdruck von beiden hydraulischen Nehmerzylindern zu überwachen.

Für den Fall, dass bei tiefen Temperaturen, also einer hohen Viskosität des Öls, der Druck des Kühlöls zur Kühlung der Kupplung nicht ausreicht, etwa weil die für die Pumpe 209b verwendete hydrodynamische Pumpe keinen hinreichenden Druck erzeugen kann, ist bei der Anordnung gemäß Fig. 12 ein Ventil 614 vorgesehen, über das ein kleiner Volumenstrom aus dem von der Pumpe 208b bereitgestellten Kühlölstrom abgezweigt werden kann, um eine Art "Notkühlung" der Kupplungsanordnungen vorzusehen, wenn dies erforderlich ist. Da die ein Öffnen des Ventils 614 erforderlich machende hohe Viskosität des Kühlöls nur bei tiefen Temperaturen vorkommt, bei denen sowieso nur ein geringer Kühlungsbedarf für die Doppelkupplung besteht, reicht ein relativ kleiner "Notkühlölstrom" aus. Diese "Notkühlung" ist überdies nur solange erforderlich, bis die Temperatur des Öls und damit die Viskosität des Öls ausreicht, um eine hinreichende Förderleistung der Kühlölpumpe 209b zu gewährleisten. Anstelle eines Ventils 614 könnte auch eine sogenannte Blende oder Drossel oder dergleichen vorgesehen sein, über die ständig ein kleiner Volumenstrom aus dem von der Pumpe 208b bereitgestellten Druckölstrom in den Kühlkreislauf abgezweigt wird. Ist das das Kühlöl nur im Bedarfsfall abzweigende Ventil 614 vorgesehen, kann die Pumpe 208b eventuell auch kurzfristig in einem Überlastbetrieb betrieben werden, um in der kurzen Zeitspanne bis zur hinreichenden Erwärmung des Öls ausreichend Kühlöl bereitzustellen. Da es sich in der Regel nur um sehr kurze Bedarfszeiträume handelt, wird die Lebensdauer der Pumpe 208b dadurch nicht wesentlich verkürzt.

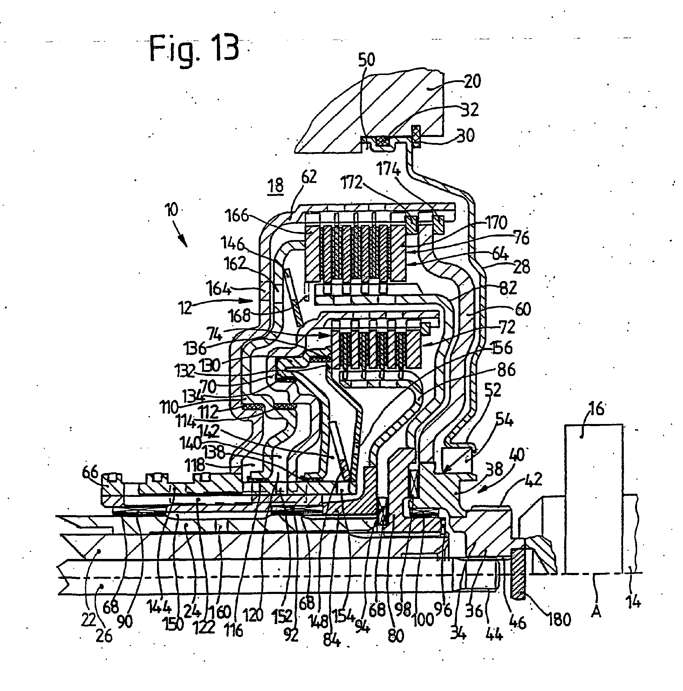

Fig. 13 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 13 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 13 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 13 nicht dargestellten Ölpumpe dient, wie noch näher erläutert wird. Ist wenigstens eine elektromotorisch angetriebene Ölpumpe vorgesehen, kann auf die Pumpenantriebswelle verzichtet werden.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung wie das in Fig. 13 gezeigte Ausführungsbeispiel, nasslaufende Reibungskupplungen, beispielsweise Lamellenkupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 13 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regeffall von der Antriebseinheit und in manchen Betriebssituationen eventuell auch vom Getriebe her über die Doppelkupplung (beispielsweise in einer durch das Stichwort "Motorbremse" charakterisierte Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 13 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Bezug nehmend auf die Anordnungen gemäß Fig. 1, 9, 11 und 12 kann die Lamellen-Kupplungsanordnung beispielsweise als die Kupplungsanordnung 204, 204a bzw. 204b identifiziert werden. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Bezug nehmend auf die Anordnungen gemäß Fig. 1, 9, 11 und 12 kann die zweite Lamellen-Kupplungsanordnung beispielsweise als die Kupplungsanordnung 204, 204a bzw. 204b identifiziert werden. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung o. dgl. ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 13 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer sich zu einer Achse A der Doppelkupplung 12 orthogonal erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer an einer Druckmediumsversorgung, ggf. die bereits erwähnte Ölpumpe oder die Pumpe 208 bzw. 208b oder das Bauteil P (220a), angeschlossenen Drucksteuereinrichtung, ggf. ein Steuerventil (ggf. Ventil 214, 214a bzw. 214b), in Verbindung, wobei der Druckmediumskanal 122 über eine das Ringteil 66 aufnehmende, ggf. getriebefeste Anschlusshülse an der Drucksteuereinrichtung angeschlossen ist. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 13 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einer/der Drucksteuereinrichtung (ggf. Ventil 216, 216a bzw. 216b in Verbindung mit der Pumpe 208 bzw. 208b bzw. dem Bauteil P (220a)) angeschlossen. Mittels der Drucksteuereinrichtung(en) kann an den beiden Druckkammern 118 und 140 wahlweise (ggf. auch gleichzeitig) von der (jeweiligen) Druckmediumquelle (ggf. Ölpumpe) aufgebrachter Druck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 12, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 132 im Fahrbetrieb mit der Kurbelwelle 14 mitdrehen, kommt es auch ohne Druckanlegung an den Druckkammern 118 und 140 von Seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man ggf. einen Volumenausgleich zur Aufnahme von im Zuge einer Betätigung der Betätigungskolben verdrängtem Druckausgleichsmedium vorsehen könnte. Bei der in Fig. 13 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das ggf. vom Bauteil P (220) oder der Pumpe 208a bzw. 209b bereitgestellte Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets bzw. durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 80 und dem Ringabschnitt 38 der Kupplungsnabe 34 (durch die Lager 98 und 100) nach radial außen strömt.

Da sich das nach radial außen strömende Kühlöl benachbart einem radial äußeren Abschnitt des der ersten Lamellen-Kupplungsanordnung 64 zugeordneten Betätigungskolbens 110 ansammeln könnte und zumindest bei größeren Drehzahlen fliehkraftbedingt die Einrückbewegung dieses Kolbens behindern könnte, weist der Kolben 110 wenigstens eine Druckausgleichsöffnung 162 auf, die einen Kühlölfluss von einer Seite des Kolbens zur anderen ermöglicht. Es wird dementsprechend zu einer Ansammlung von Kühlöl auf beiden Seiten des Kolbens kommen mit entsprechender Kompensation fliehkraftbedingt auf den Kolben ausgeübter Druckkräfte. Ferner wird verhindert, dass andere auf einer Wechselwirkung des Kühlöls mit dem Kolben beruhende Kräfte die erforderlichen axialen Kolbenbewegungen behindern. Es wird hier beispielsweise an hydrodynamische Kräfte o. dgl. gedacht sowie an ein "Festsaugen" des Kolbens am Außenlamellenträger 62.

Es ist auch möglich, wenigstens eine Kühlölabflussöffnung im sich radial erstreckenden, radial äußeren Bereich des Außenlamellenträgers 62 der ersten Lamellen-Kupplungsanordnung 64 vorzusehen. Eine derartige Kühlölabflussöffnung ist bei 164 gestrichelt angedeutet. Um trotzdem eine hinreichende Durchströmung des Lamellenpakets 76 der ersten Lamellen-Kupplungsanordnung 64 mit Kühlfluid (Kühlöl) zu gewährleisten, kann ein Kühlölleitelement (allgemein ein Kühlfluidleitelement) vorgesehen sein. In Fig. 13 ist gestrichelt angedeutet, dass eine benachbarte Endlamelle 166 des Lamellenpakets 76 einen Kühlölleitabschnitt 168 aufweisen könnte, so dass die Endlamelle 166 selbst als Kühlölleitelement dient.

Im Hinblick auf eine einfache Ausbildung der Drucksteuereinrichtung für die Betätigung der beiden Lamellen-Kupplungsanordnungen wurde bei dem Ausführungsbeispiel der Fig. 13 vorgesehen, dass eine für die radial innere Lamellen-Kupplungsanordnung 72 bezogen auf einen Betätigungsdruck an sich gegebene, im Vergleich zur anderen Kupplungsanordnung 64 geringere Momentenübertragungsfähigkeit (aufgrund eines geringeren effektiven Reibradius als die radial äußere Kupplungsanordnung 64) zumindest teilweise kompensiert wird. Hierzu ist die der Druckkammer 140 zugeordnete Druckbeaufschlagungsfläche des Kolbens 130 größer als die der Druckkammer 118 zugeordnete Druckbeaufschlagungsfläche des Kolbens 110, so dass bei gleichem Hydrauliköldruck in den Druckkammern auf den Kolben 130 größere axial gerichtete Kräfte als auf den Kolben 110 ausgeübt werden.

Es sollte noch erwähnt werden, dass durch eine radiale Staffelung der den Kolben zugeordneten Dichtungen, speziell auch eine axiale Überlappung von wenigstens einigen der Dichtungen, eine gute Ausnutzung des zur Verfügung stehenden Bauraums ermöglicht.

Bei den Lamellenpaketen 74, 76 können Maßnahmen zur Vermeidung der Gefahr einer Überhitzung getroffen sein zusätzlich zu der schon beschriebenen Zufuhr von Kühlöl und der Ausbildung von (in der Fig. 13 nur schematisch angedeuteten) Kühlöldurchtrittsöffnungen in den Lamellenträgern. So ist es vorteilhaft, wenigstens einige der Lamellen als "Wärmezwischenspeicher" zu nutzen, die etwa während eines Schlupfbetriebs entstehende, die Wärmeabfuhrmöglichkeiten mittels des Kühlfluids (hier Kühlöls) oder durch Wärmeleitung über die Lamellenträger momentan überfordernde Wärme zwischenspeichern, um die Wärme zu einem späteren Zeitpunkt, etwa in einem ausgekuppelten Zustand der betreffenden Lamellen-Kupplungsanordnung, abführen zu können. Hierzu sind bei der radial inneren (zweiten) Lamellen-Kupplungsanordnung reibbelaglose, also keinen Reibbelag tragende Lamellen axial dicker als Reibbelagtragelemente von Reibbelag-tragenden Lamellen ausgebildet, um für die reibbelaglosen Lamellen jeweils ein vergleichsweise großes Materialvolumen mit entsprechender Wärmekapazität vorzusehen. Diese Lamellen sollten aus einem Material hergestellt werden, das eine nennenswerte Wärmespeicherfähigkeit (Wärmekapazität) hat, beispielsweise aus Stahl. Die Reibbelag-tragenden Lamellen können im Falle einer Verwendung von üblichen Reibbelägen, beispielsweise aus Papier, nur wenig Wärme zwischenspeichern, da Papier eine schlechte Wärmeleitfähigkeit hat.

Die Wärmekapazität der die Reibbeläge tragenden Reibbelagtragelemente können ebenfalls als Wärmespeicher verfügbar gemacht werden, wenn man anstelle von Belagmaterialien mit geringer Leitfähigkeit Belagmaterialien mit hoher Leitfähigkeit verwendet. In Betracht kommt die Verwendung von Reibbelägen aus Sintermaterial, das eine vergleichsweise hohe Wärmeleitfähigkeit hat. Problematisch an der Verwendung von Sinterbelägen ist allerdings, dass Sinterbeläge einen degressiven Verlauf des Reibwerts 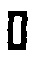 über einer Schlupfdrehzahl (Relativdrehzahl 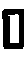 N zwischen den reibenden Oberflächen) aufweist, also dass d 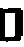 /d 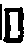 N <0 gilt. Ein degressiver Verlauf des Reibwerts ist insoweit nachteilig, als dieser eine Selbsterregung von Schwingungen im Antriebsstrang fördern kann bzw. derartige Schwingungen zumindest nicht dämpfen kann. Es ist deshalb vorteilhaft, wenn in einem Lamellenpaket sowohl Lamellen mit Reibbelägen aus Sintermaterial als auch Lamellen mit Reibbelägen aus einem anderen Material mit progressivem Reibwertverlauf über der Schlupfdrehzahl (d 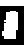 /d 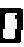 N >0) vorgesehen sind, so dass sich für das Lamellenpaket insgesamt ein progressiver Reibwertverlauf über der Schlupfdrehzahl oder zumindest näherungsweise ein neutraler Reibwertverlauf über der Schlupfdrehzahl (d 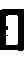 /d 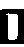 N =0) ergibt und dementsprechend eine Selbsterregung von Schwingungen im Antriebsstrang zumindest nicht gefördert wird oder - vorzugsweise - Drehschwingungen im Antriebsstrang sogar (aufgrund eines nennenswert progressiven Reibwertverlaufs über der Schlupfdrehzahl) gedämpft werden.

Es wird hier davon ausgegangen, dass beim Ausführungsbeispiel der Fig. 13 das Lamellenpaket 74 der radial inneren Lamellen-Kupplungsanordnung 72 ohne Sinterbeläge ausgeführt ist, da die radial äußere Lamellen-Kupplungsanordnung 64 vorzugsweise als Anfahrkupplung mit entsprechendem Schlupfbetrieb eingesetzt wird. Letzteres, also die Verwendung der radial äußeren Lamellen-Kupplungsanordnung als Anfahrkupplung, ist insoweit vorteilhaft, als dass aufgrund des größeren effektiven Reibradius diese Lamellen-Kupplungsanordnung mit geringeren Betätigungskräften (für die gleiche Momentenübertragungsfähigkeit) betrieben werden kann, so dass die Flächenpressung gegenüber der zweiten Lamellen-Kupplungsanordnung reduziert sein kann. Hierzu trägt auch bei, wenn man die Lamellen der ersten Lamellen-Kupplungsanordnung 64 mit etwas größerer radialer Höhe als die Lamellen der zweiten Lamellen-Kupplungsanordnung 72 ausbildet. Gewünschtenfalls können aber auch für das Lamellenpaket 74 der radial inneren (zweiten) Lamellen-Kupplungsanordnung 72 Reibbeläge aus Sintermaterial verwendet werden, vorzugsweise - wie erläutert - in Kombination mit Reibbelägen aus einem anderen Material, etwa Papier.

Während bei dem Lamellenpaket 74 der radial inneren Lamellen-Kupplungsanordnung 72 alle Innenlamellen Reibbelag-tragende Lamellen und alle Außenlamellen belaglose Lamellen sind, wobei die das Lamellenpaket axial begrenzenden Endlamellen Außenlamellen und damit belaglose Lamellen sind, sind beim Lamellenpaket 76 der ersten Lamellen-Kupplungsanordnung 64 die Innenlamellen belaglose Lamellen und die Außenlamellen einschließlich der Endlamellen 166, 170 Reibbelag-tragende Lamellen. Wenigstens die Endlamellen 166 und 170 weisen nach einer bevorzugten Ausbildung axial wesentlich dickere Belagtragelemente als die Belagtragelemente der anderen Außenlamellen auf und sind mit Belägen aus Sintermaterial ausgebildet, um die ein vergleichsweise großes Volumen aufweisenden Belagtragelemente der beiden Endlamellen als Wärmezwischenspeicher nutzbar zu machen. Wie beim Lamellenpaket 74 sind die belaglosen Lamellen axial dicker als die Reibbelagtragelemente der Reibbelag- tragenden Lamellen (mit Ausnahme der Endlamellen), um eine vergleichsweise große Wärmekapazität zur Wärmezwischenspeicherung bereitzustellen. Die axial innen liegenden Außenlamellen sollten zumindest zum Teil Reibbeläge aus einem anderen, einen progressiven Reibwertverlauf zeigenden Material, aufweisen, um für das Lamellenpaket insgesamt zumindest eine näherungsweise neutralen Reibwertverlauf über der Schlupfdrehzahl zu erreichen.

Weitere Einzelheiten der Doppelkupplung 12 gemäß dem beschriebenen Ausführungsbeispiel sind für den Fachmann ohne weiteres aus Fig. 13 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

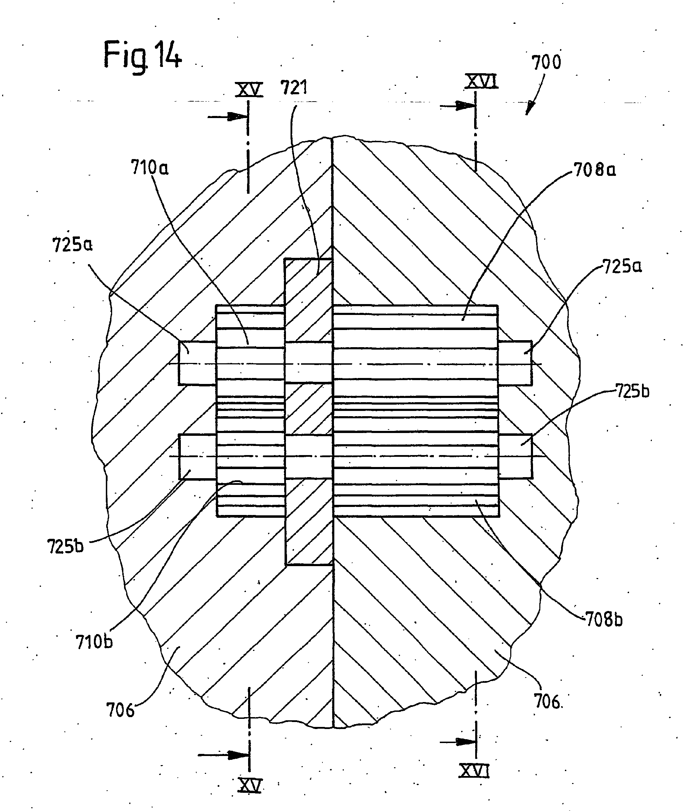

Fig. 14 zeigt ein Rotorgerät 700, das als Komponente P (220) in der Anordnung gemäß Fig. 1 oder als Komponente P (220a) der Anordnung gemäß Fig. 9 einsetzbar ist. Bezug nehmend auf die Anwendungssituation gemäß Fig. 1 weist das Rotorgerät wenigstens einen über das Ventil 218 oder direkt an der Pumpe 208 angeschlossenen Druckmittelanschluss 702 und einen am Reservoir 222 angeschlossenen Kühlölanschluss 703 auf, von dem Kühlöl, ggf. über ein nicht dargestelltes Rückschlagventil, in ein mehrteilig ausgeführtes Gehäuse 706 des Rotorgeräts 700 fließen kann, hin zu zwei Förderrotoren 708a und 708b, die miteinander kämmende Fördergeometrien in Form von Verzahnungen aufweisen. Die beiden Förderrotoren 708a und 708b bilden eine Außenzahnradpumpe.

Über den Anschluss 702 in das Gehäuse 706 einströmendes Drucköl trifft auf zwei Antriebsrotoren 710a und 710b, die miteinander kämmende Antriebsgeometrien in Form von Verzahnungen aufweisen und durch das Drucköl in Drehung versetzt werden. Die beiden Antriebsrotoren bilden einen Hydromotor 710 in Umlaufverdrängerbauart, speziell einen Außenzahnradmotor. Der Antriebsrotor 710a ist mit dem Förderrotor 708a und der Antriebsrotor 710b ist mit dem Förderrotor 708b drehfest verbunden. Das von den Förderrotoren 708a und 708b geförderte Kühlöl fließt über einen Abflusskanal 716 in Richtung zur Doppelkupplung 202, um die Lamellenkupplungen 204 und 206 mit Kühlöl zu versorgen. Das Drucköl, das die Antriebsrotoren 710a und 710b passiert hat, fließt über einen Kanal 717 ab, der vorzugsweise in den Kanal 716 übergeht.

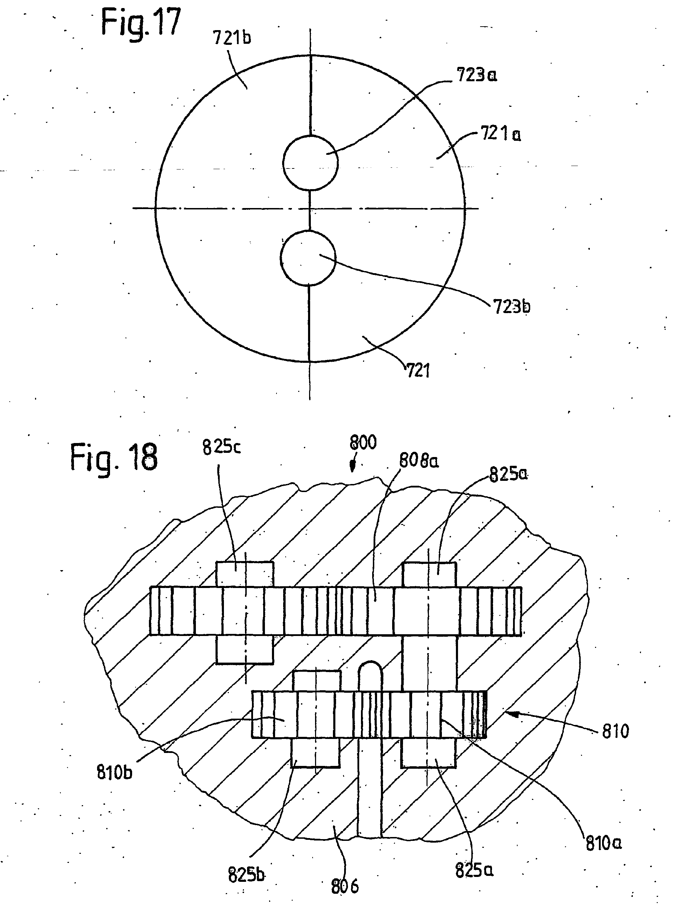

Wie in Fig. 14 gezeigt, können der Antriebsrotor 710a und der Förderrotor 708a eine gemeinsame Drehwelle aufweisen, beispielsweise derart, dass zwei Zahnräder in eine Drehwelle eingefräst sind. Gleiches kann, wie in Fig. 14 gezeigt, für den Antriebsrotor 71 0b und den Förderrotor 708b gelten. Wie erläutert, wird das Rotorpaar (ggf. Zahnradpaar) 710a, 710b durch die Pumpe 208, vorzugsweise eine hydrostatische Pumpe, angetrieben. Da sich das Rotorpaar (ggf. Zahnradpaar) 708a, 708b auf der gleichen Welle mit einem jeweiligen Antriebsrotor befindet und - wie in Fig. 14 zu erkennen - axial länger ist (axial breitere Zähne aufweist) als die Antriebsrotoren, kann ein größerer Volumenstrom bei geringerem Druck gefördert werden. Gemäß Fig. 14 sind die beiden Rotorpaare und damit die Volumenströme (Druckölvolumenstrom und Kühlölvolumenstrom) durch eine geteilte Trenn- oder Dichtscheibe 721 voneinander getrennt. Die Dichtscheibe ist in Fig. 17 dargestellt und besteht aus zwei Halbscheiben 721 a und 721 b, die im zusammengesetzten Zustand zwei Öffnungen 723a und 723b für die Rotorwellen 725a und 725b begrenzen.

Eine andere Ausführungsform eines nach dem gleichen Prinzip funktionierenden Rotorgeräts 800 ist in Fig. 18 schematisch gezeigt. Hier besitzen die Antriebsrotoren 810a und 810b des Hydromotors 810 einen kleineren Durchmesser als die Förderrotoren 808a und 808b, so dass sich wiederum vermittels der Förderrotoren ein Volumenstrom fördern lässt, der größer ist als ein die Antriebsrotoren 810a und 810b antreibender Druckölstrom, hingegen aber einen geringeren Druck als dieser Druckölstrom aufweist. Der Antriebsrotor 810a und der Förderrotor 808a weisen eine gemeinsame Drehwelle 825a auf. Der Antriebsrotor 810b und der Förderrotor 808b weisen jeweils eine eigene Drehwelle 825b bzw. 825c auf. Diese beiden Rotoren 810b und 808b stehen über ihre mit den Verzahnungen der Rotoren 810a und 808a kämmende Verzahnungen mit diesen Rotoren, also den Rotoren 810a und 808a, in Antriebsverbindung.

Zusammenfassend betrifft die Erfindung ein Kupplungssystem, umfassend wenigstens eine Kupplungseinrichtung insbesondere für die Anordnung in einem Antriebsstrang zwischen einer Antriebseinheit und einem Getriebe. Die Kupplungseinrichtung ist unter Vermittlung von Druckmedium betätigbar oder/und für einen Betrieb unter Einwirkung eines Betriebsmediums vorgesehen. Es wird nach einem Aspekt der Erfindung vorgeschlagen, dass ein als Druckmedium für die Betätigung dienendes oder als Betriebsmedium für den Betrieb der Kupplungsanordnung dienendes Sekundärmedium vermittels einer ein Primärmedium bereit stellenden Pumpenanordnung und einer an der Pumpenanordnung angeschlossenen Sekundärmediumbereitstellanordnung oder sekundären Pumpenanordnung bereitstellbar ist, wobei die Sekundärmediumbereitstellanordnung bzw. sekundäre Pumpenanordnung aufweist: wenigstens ein in einem Gehäuse bewegbar angeordnetes und im Betrieb mit dem von der erstgenannten Pumpenanordnung bereitgestellten Primärmedium zumindest an wenigstens einer Druckaufnahmefläche ausgesetztes Druckaufnahmeelement, das unter Vermittlung des Betriebsmediums in Bewegung versetzbar ist, und wenigstens ein in dem/einem Gehäuse bewegbar angeordnet ist, mit dem Druckaufnahmeelement bewegungsverkoppeltes und im Betrieb mit dem Sekundärmedium zumindest an wenigstens einer Wechselwirkungsfläche wechselwirkende Wechselwirkungselement, unter dessen Vermittlung das Sekundärmedium bereitstellbar ist gegebenenfalls durch Verdrängung oder/und Erteilung einer Beschleunigung oder/und Erteilung einer Beschleunigung oder/und Erteilung eines Dralls.

## Patentansprüche

1. Kupplungssystem, umfassend wenigstens eine Kupplungseinrichtung insbesondere für die Anordnung in einem Antriebsstrang zwischen einer Antriebseinheit und einem Getriebe, wobei die Kupplungseinrichtung (202) wenigstens eine unter Vermittlung von Druckmedium betätigbare und für einen Betrieb unter Einwirkung eines Betriebsmediums vorgesehene Kupplungsanordnung (204, 206) aufweist,
**dadurch gekennzeichnet,**
**dass** der Kupplungsanordnung (204, 206) für diesen Betrieb Betriebsmedium zuführbar ist auf Grundlage einer Druckmedium bereitstellenden ersten Pumpenanordnung (208) (diese wird im Folgenden auch primäre Pumpenanordnung genannt) und einer an der ersten Pumpenanordnung angeschlossenen, durch das von der ersten Pumpenanordnung bereitgestellte Druckmedium antreibbaren zweiten Pumpenanordnung (220) (diese wird im Folgenden auch sekundäre Pumpenanordnung genannt), wobei die sekundäre Pumpenanordnung (220) wenigstens ein in einem Gehäuse (232; 306; 402) bewegbar angeordnetes, unter Vermittlung des Druckmediums (dieses wird im Folgenden auch Primärmedium genannt) antreibbares und mit dem Betriebsmedium (dieses wird im Folgenden auch Sekundärmedium genannt) wechselwirkendes Pumpenelement (234; 310; 410) aufweist, das im Betrieb das Sekundärmedium (Betriebsmedium) durch Verdrängung oder/und Erteilung einer Beschleunigung oder/und Erteilung eines Dralls in Richtung zur Kupplungsanordnung fördert.

2. Kupplungssystem, umfassend wenigstens eine Kupplungseinrichtung insbesondere für die Anordnung in einem Antriebsstrang zwischen einer Antriebseinheit und einem Getriebe, wobei die Kupplungseinrichtung (202a) wenigstens eine unter Vermittlung von Druckmedium betätigbare und für einen Betrieb unter Einwirkung eines Betriebsmediums vorgesehene Kupplungsanordnung (204a, 206a) aufweist,
**dadurch gekennzeichnet, dass** das Druckmedium für die Betätigung bereitstellbar ist auf Grundlage einer das Betriebsmedium bereitstellenden zweiten Pumpenanordnung (208a) (diese wird im Folgenden auch primäre Pumpenanordnung genannt), und einer an der zweiten Pumpenanordnung angeschlossenen, durch das von der zweiten Pumpenanordnung bereitgestellte Betriebsmedium antreibbaren ersten Pumpenanordnung (220a) (diese wird im Folgenden auch sekundäre Pumpenanordnung genannt), wobei die sekundäre Pumpenanordnung (220a) wenigstens ein in einem Gehäuse bewegbar angeordnetes, unter Vermittlung des Betriebsmediums (dieses wird im Folgenden auch Primärmedium genannt) antreibbares und mit dem Druckmedium (dieses wird im Folgenden auch Sekundärmedium genannt) wechselwirkendes Pumpenelement (534) aufweist, das im Betrieb das Sekundärmedium (Druckmedium) durch Verdrängung oder/und Erteilung einer Beschleunigung oder/und Erteilung eines Dralls auf einen zur Kupplungsbetätigung hinreichenden Druck bringt.

3. Kupplungssystem nach Anspruch 1 oder 2, **dadurch gekennzeichnet, dass** die zweite Pumpenanordnung (220; 208a) an einem Betriebsmediumreservoir angeschlossen ist und von diesem Betriebsmedium für die Zufuhr zur Kupplungsanordnung bezieht.

4. Kupplungssystem nach einem der Ansprüche 1 bis 3, **dadurch gekennzeichnet, dass** die zweite Pumpenanordnung (220; 208a) das Betriebsmedium in einem Betriebsmediumstrom bereitstellt, der im Druck gegenüber einem von der ersten Pumpenanordnung (208; 220a) abgegebenen Druck des Druckmediums kleiner ist und bezogen auf das im zeitlichen Mittel pro Zeiteinheit bereitgestellte Mediumvolumen größer ist als ein gegebenenfalls von der ersten Pumpenanordnung zur zweiten Pumpenanordnung fließender oder insgesamt im Dauerbetrieb von der ersten Pumpenanordnung bereitstellbarer Druckmediumstrom.

5. Kupplungssystem nach einem der Ansprüche 1 bis 4, **dadurch gekennzeichnet, dass** die primäre Pumpenanordnung (208; 208a) elektrisch oder/und unter Vermittlung der Antriebseinheit oder/und des Getriebes antreibbar ist.

6. Kupplungssystem nach einem der Ansprüche 1 bis 5, **dadurch gekennzeichnet, dass** von der ersten und der zweiten Pumpenanordnung mindestens eine wenigstens eine hydrostatische Pumpe oder als Verdrängermaschine ausgebildete Pumpe umfasst.

7. Kupplungssystem nach Anspruch 6, **dadurch gekennzeichnet, dass** die erste Pumpenanordnung (208; 220a) wenigstens eine hydrostatische Pumpe oder als Verdrängermaschine ausgebildete Pumpe (500) aufweist.

8. Kupplungssystem nach einem der Ansprüche 1 bis 7, **dadurch gekennzeichnet, dass** von der ersten und der zweiten Pumpenanordnung mindestens eine wenigstens eine hydrodynamische Pumpe oder als Strömungsmaschine ausgebildete Pumpe umfasst.

9. Kupplungssystem nach einem der Ansprüche 1 bis 8, **dadurch gekennzeichnet, dass** die sekundäre Pumpenanordnung wenigstens eine durch das von der primären Pumpenanordnung bereitgestellte Primärmedium antreibbare Kolbenpumpe (230; 500) aufweist.

10. Kupplungssystem nach Anspruch 1, **dadurch gekennzeichnet, dass** die Pumpenanordnung (208) bzw. die erste Pumpenanordnung (208) dafür ausgelegt ist, Druckmittel bei einem zur Betätigung der Kupplungsanordnung hinreichenden Druck bereitzustellen.

11. Kupplungssystem nach einem der vorhergehenden Ansprüche, **dadurch gekennzeichnet, dass** die Kupplungsanordnung eine nasslaufende Kuppungsanordnung (204, 206; 204a, 206a) ist, dass der Betrieb unter Einwirkung des Betriebsmediums ein nasslaufender Betrieb ist und dass das Betriebsmedium eine Betriebsflüssigkeit, gegebenenfalls eine Kühlflüssigkeit, ist.

12. Kupplungssystem nach einem der vorhergehenden Ansprüche, **dadurch gekennzeichnet, dass** die Kupplungsanordnung (204, 206; 204a, 206a) als Lamellen-Kupplungsanordnung ausgebildet ist.

13. Kupplungssystem nach einem der vorhergehenden Ansprüche, **dadurch gekennzeichnet, dass** das Druckmedium ein hydraulisches Druckmedium, insbesondere ein Hydrauliköl ist, das gegebenenfalls auch als Kühlflüssigkeit dient.

14. Kupplungssystem nach einem der vorhergehenden Ansprüche, **dadurch gekennzeichnet, dass** die Kupplungseinrichtung eine Mehrfach-Kupplungseinrichtung (202; 202a) mit mehreren Kupplungsanordnungen (204, 206; 204a, 206a) ist.

15. Kupplungssystem nach einem der vorhergehenden Ansprüche, **dadurch gekennzeichnet, dass** der Kupplungsanordnung Betriebsmedium unter Vermittlung eines an der Pumpenanordnung bzw. der zweiten Pumpenanordnung angeschlossenen oder anschließbaren Betriebsmediumspeichers zuführbar ist.

16. Kupplungssystem nach einem der vorhergehenden Ansprüche, **dadurch gekennzeichnet, dass** die Kupplungsanordnung unter Vermittlung eines an der Pumpenanordnung bzw. der ersten Pumpenanordnung (220a) angeschlossenen oder anschließbaren Druckmediumspeichers betätigbar ist.

## Claims

1. Clutch system, comprising at least one clutch device, in particular for arranging in a drive train between a drive unit and a transmission, the clutch device (202) having at least one clutch arrangement (204, 206) which can be actuated via pressure medium and is provided for operation under the action of an operating medium, **characterized in that** the clutch arrangement (204, 206) can be supplied with operating medium for this operation on the basis of a first pump arrangement (208) (this is also called the primary pump arrangement in the following text) which provides pressure medium and a second pump arrangement (220) (this is also called the secondary pump arrangement in the following text) which is connected to the first pump arrangement and can be driven by the pressure medium which is provided by the first pump arrangement, the secondary pump arrangement (220) having at least one pump element (234; 310; 410) which is arranged movably in a housing (232; 306; 402), can be driven via the pressure medium (this is also called the primary medium in the following text), interacts with the operating medium (this is also called the secondary medium in the following text) and, during operation, conveys the secondary medium (operating medium) in the direction of the clutch arrangement by displacement and/or imparting an acceleration and/or imparting a swirl.

2. Clutch system, comprising at least one clutch device, in particular for arranging in a drive train between a drive unit and a transmission, the clutch device (202a) having at least one clutch arrangement (204a, 206a) which can be actuated via pressure medium and is provided for operation under the action of an operating medium, **characterized in that** the pressure medium for the actuation can be provided on the basis of a second pump arrangement (208a) (this is also called the primary pump arrangement in the following text) which provides the pressure medium and a first pump arrangement (220a) (this is also called the secondary pump arrangement in the following text) which is connected to the second pump arrangement and can be driven by the operating medium which is provided by the second pump arrangement, the secondary pump arrangement (220a) having at least one pump element (534) which is arranged movably in a housing, can be driven via the operating medium (this is also called the primary medium in the following text), interacts with the pressure medium (this is also called the secondary medium in the following text) and, during operation, brings the secondary medium (pressure medium) to a pressure which is sufficient for clutch actuation by displacement and/or imparting an acceleration and/or imparting a swirl.

3. Clutch system according to Claim 1 or 2, **characterized in that** the second pump arrangement (220; 208a) is connected to an operating-medium reservoir and draws from this operating medium for the supply to the clutch arrangement.

4. Clutch system according to one of Claims 1 to 3, **characterized in that** the second pump arrangement (220; 208a) provides the operating medium in an operating-medium flow which is at a lower pressure than a pressure of the pressure medium output by the first pump arrangement (208; 220a) and, in relation to the medium volume which is provided per unit time on average over the course of time is greater than a pressure-medium flow which possibly flows from the first pump arrangement to the second pump arrangement or can be provided overall during permanent operation by the first pump arrangement.

5. Clutch system according to one of Claims 1 to 4, **characterized in that** the primary pump arrangement (208; 208a) can be driven electrically and/or via the drive unit and/or the transmission.

6. Clutch system according to one of Claims 1 to 5, **characterized in that**, of the first and the second pump arrangements, at least one comprises at least one hydrostatic pump or one pump which is configured as a displacement machine.

7. Clutch system according to Claim 6, **characterized in that** the first pump arrangement (208; 220a) has at least one hydrostatic pump or one pump (500) which is configured as a displacement machine.

8. Clutch system according to one of Claims 1 to 7, **characterized in that**, of the first and the second pump arrangements, at least one comprises at least one hydrodynamic pump or one pump which is configured as a turbomachine.

9. Clutch system according to one of Claims 1 to 8, **characterized in that** the secondary pump arrangement has at least one piston pump (230; 500) which can be driven by the primary medium which is provided by the primary pump arrangement.

10. Clutch system according to Claim 1, **characterized in that** the pump arrangement (208) or the first pump arrangement (208) is designed for providing pressure medium at a pressure which is sufficient to actuate the clutch arrangement.

11. Clutch system according to one of the preceding claims, **characterized in that** the clutch arrangement is a wet-running clutch arrangement (204, 206; 204a, 206a), **in that** the operation under the action of the operating medium is a wet-running operation, and **in that** the operating medium is an operating fluid, optionally a cooling fluid.

12. Clutch system according to one of the preceding claims, **characterized in that** the clutch arrangement (204, 206; 204a, 206a) is configured as a multiple disc clutch arrangement.

13. Clutch system according to one of the preceding claims, **characterized in that** the pressure medium is a hydraulic pressure medium, in particular a hydraulic oil, which optionally also serves as cooling fluid.

14. Clutch system according to one of the preceding claims, **characterized in that** the clutch device is a multiple clutch device (202; 202a) having a plurality of clutch arrangements (204, 206; 204a, 206a).

15. Clutch system according to one of the preceding claims, **characterized in that** the clutch arrangement can be fed operating medium via an operating-medium reservoir which is connected or can be connected to the pump arrangement or the second pump arrangement.

16. Clutch system according to one of the preceding claims, **characterized in that** the clutch arrangement can be actuated via a pressure-medium reservoir which is connected or can be connected to the pump arrangement or the first pump arrangement (220a).

## Revendications

1. Système d'embrayage, comprenant au moins un dispositif d'embrayage, notamment devant être disposé dans une chaîne de transmission entre une unité d'entraînement et une boîte de vitesses, le dispositif d'embrayage (202) présentant au moins un agencement d'embrayage (204, 206) pouvant être actionné par l'intermédiaire d'un fluide de pression et prévu pour fonctionner sous l'effet d'un fluide de travail,
**caractérisé en ce que**
l'agencement d'embrayage (204, 206) pour ce fonctionnement peut être alimenté en fluide de travail, sur la base d'un premier agencement de pompe (208) (ci-après appelé agencement de pompe primaire) fournissant du fluide de pression et sur la base d'un deuxième agencement de pompe (220) (ci-après appelé agencement de pompe secondaire) raccordé au premier agencement de pompe, pouvant être entraîné par le fluide de pression fourni par le premier agencement de pompe, l'agencement de pompe secondaire (220) présentant au moins un élément de pompe (234 ; 310 ; 410) disposé mobile dans un boîtier (232 ; 306 ; 402), pouvant être entraîné par l'intermédiaire du fluide de pression (ci-après appelé fluide primaire) et coopérant avec le fluide de travail (ci-après appelé fluide secondaire), l'élément de pompe transportant pendant le fonctionnement le fluide secondaire (fluide de travail) par refoulement et/ou création d'une accélération et/ou création d'un mouvement tourbillonnaire dans la direction de l'agencement d'embrayage.

2. Système d'embrayage, comprenant au moins un dispositif d'embrayage, notamment devant être disposé dans une chaîne de transmission entre une unité d'entraînement et une boîte de vitesses, le dispositif d'embrayage (202a) présentant au moins un agencement d'embrayage (204a, 206a) pouvant être actionné par l'intermédiaire d'un fluide de pression et prévu pour fonctionner sous l'effet d'un fluide de travail,
**caractérisé en ce que**
le fluide de pression peut être fourni pour l'actionnement sur la base d'un deuxième agencement de pompe (208a) (ci-après appelé agencement de pompe primaire) fournissant le fluide de travail et sur la base d'un premier agencement de pompe (220a) (ci-après appelé agencement de pompe secondaire) raccordé au deuxième agencement de pompe, pouvant être entraîné par le fluide de travail fourni par le deuxième agencement de pompe, l'agencement de pompe secondaire (220a) présentant au moins un élément de pompe (534) disposé mobile dans un boîtier, pouvant être entraîné par l'intermédiaire du fluide de travail (ci-après appelé fluide primaire) et coopérant avec le fluide de pression (ci-après appelé fluide secondaire), l'élément de pompe amenant pendant le fonctionnement le fluide secondaire (fluide de pression) à une pression suffisante pour l'actionnement de l'embrayage par refoulement et/ou création d'une accélération et par création d'un mouvement tourbillonnaire.

3. Système d'embrayage selon la revendication 1 ou 2, **caractérisé en ce que** le deuxième agencement de pompe (220 ; 208a) est raccordé à un réservoir de fluide de travail et reçoit ce fluide de travail pour l'alimentation à l'agencement d'embrayage.

4. Système d'embrayage selon l'une quelconque des revendications 1 à 3, **caractérisé en ce que** le deuxième agencement de pompe (220 ; 208a) fournit le fluide de travail dans un courant de fluide de travail qui a une pression inférieure par rapport à la pression fournie par le premier agencement de pompe (208 ; 220a), et qui est plus important par rapport au volume de fluide fourni en moyenne temporelle par unité de temps qu'un courant de fluide de pression s'écoulant éventuellement du premier agencement de pompe vers le deuxième agencement de pompe ou pouvant être fourni dans l'ensemble pendant un fonctionnement durable du premier agencement de pompe.

5. Système d'embrayage selon l'une quelconque des revendications 1 à 4, **caractérisé en ce que** l'agencement de pompe primaire (208 ; 208a) peut être entraîné électriquement et/ou par l'intermédiaire de l'unité d'entraînement et/ou de la boîte de vitesses.

6. Système d'embrayage selon l'une quelconque des revendications 1 à 5, **caractérisé en ce qu'**au moins l'un du premier et du deuxième agencement de pompe présente au moins une pompe hydrostatique ou réalisée sous forme de corps de déplacement.

7. Système d'embrayage selon la revendication 6, **caractérisé en ce que** le premier agencement de pompe (208 ; 220a) présente au moins une pompe hydrostatique ou une pompe (500) réalisée sous forme de corps de déplacement.

8. Système d'embrayage selon l'une quelconque des revendications 1 à 7, **caractérisé en ce qu'**au moins l'un du premier et du deuxième agencement de pompe présente au moins une pompe hydrodynamique ou réalisée sous forme de turbomachine.

9. Système d'embrayage selon l'une quelconque des revendications 1 à 8, **caractérisé en ce que** l'agencement de pompe secondaire présente au moins une pompe à piston (230 ; 500) pouvant être entraînée par le fluide primaire fourni par l'agencement de pompe primaire.

10. Système d'embrayage selon la revendication 9, **caractérisé en ce que** l'agencement de pompe (208) ou le premier agencement de pompe (208) est conçu de manière à fournir du fluide de pression à une pression suffisante pour actionner l'agencement d'embrayage.

11. Système d'embrayage selon l'une quelconque des revendications précédentes, **caractérisé en ce que** l'agencement d'embrayage est un agencement d'embrayage humide (204, 206 ; 204a, 206a), **en ce que** le fonctionnement sous l'effet du fluide de travail est un fonctionnement humide et **en ce que** le fluide de travail est un liquide de travail, éventuellement un liquide de refroidissement.

12. Système d'embrayage selon l'une quelconque des revendications précédentes, **caractérisé en ce que** l'agencement d'embrayage (204, 206 ; 204a, 206a) est réalisé sous forme d'agencement d'embrayage multidisques.

13. Système d'embrayage selon l'une quelconque des revendications précédentes, **caractérisé en ce que** le fluide de pression est un fluide de pression hydraulique, notamment une huile hydraulique, qui sert éventuellement aussi de liquide de refroidissement.

14. Système d'embrayage selon l'une quelconque des revendications précédentes, **caractérisé en ce que** le dispositif d'embrayage est un dispositif d'embrayage multiple (202 ; 202a) avec plusieurs agencements d'embrayage (204, 206 ; 204a, 206a).

15. Système d'embrayage selon l'une quelconque des revendications précédentes, **caractérisé en ce qu'**un fluide de travail peut être acheminé à l'agencement d'embrayage par l'intermédiaire d'un accumulateur de fluide de travail raccordé ou pouvant être raccordé à l'agencement de pompe ou au deuxième agencement de pompe.

16. Système d'embrayage selon l'une quelconque des revendications précédentes, **caractérisé en ce que** l'agencement d'embrayage peut être actionné par l'intermédiaire d'un accumulateur de fluide de pression raccordé ou pouvant être raccordé à l'agencement de pompe ou au premier agencement de pompe (220a).
